# EUROPEAN PATENT APPLICATION

(11) **EP 1 276 065 A2**
(43) Date of publication of application: **15.01.2003**
(21) Application number: 02014825.0
(22) Date of filing: 03.07.2002
(51) Int. Cl.: G06F 17/60

(54) **Printing cost calculation system and coloring material supply management system**

(30) Priority: 12.07.2001 JP 2001211677; 12.07.2001 JP 2001211678
(71) Applicant: SEIKO EPSON CORPORATION, Shinjuku-ku, Tokyo 163-0811 (JP)
(72) Inventor: Minowa, Yoshiki, Suwa-shi, Nagano-ken 392-8502 (JP); Akaiwa, Masao, Suwa-shi, Nagano-ken 392-8502 (JP)
(74) Representative: Hoffmann, Eckart, Dipl.-Ing.

(57) **Abstract**

There are provided a printing cost calculation system that is capable of efficiently and rapidly calculating accurate printing cost, by calculating an amount of coloring material consumed by a printing apparatus, based on a digital image, and receiving information of the calculation via a network, and a coloring material supply management system that is capable of efficiently and rapidly supplying coloring material, by receiving the information via the network. An amount of at least one coloring material to be consumed by a printing apparatus is calculated, based on digital image represented by discrete numerical data. Information of the amount of the at least one coloring material to be consumed is received via a network. The printing cost is calculated based on the information (printing cost calculation system). The supply of the at least one coloring material to the printing apparatus is instructed based on the information (coloring material supply management system).

## Description

### BACKGROUND OF THE INVENTION

### Field of the Invention

This invention relates to a printing cost calculation system that is capable of calculating a printing cost required for producing printed matter by using at least one coloring material, based on a digital image represented by discrete numerical values, and a coloring material supply management system that instructs supply of at least one coloring material to a printing apparatus that forms the printed matter.

### Prior Art

Conventionally, a printing company having received a request for producing printed matter calculates a printing fee including an initial cost required for producing the printed matter, based on an artwork cost and a plate cost. For example, assuming that 2-color printing costs 50,000 yen for two sheets of artwork required therefor, and 3-color printing 70,000 yen for three sheets of artwork required therefor (in these cases, the artwork cost and the plate cost include a material cost, and an ink cost), and that the number of print copies of the printed matter to be produced is 5,000, a printing cost per copy of 2-color printing is 10 yen, and a printing cost per copy of 3-color printing is 14 yen. As described above, with an increase in number of colors for use in printing, the number of required sheets of artwork increases, which causes an increase in printing cost. On the other hand, assuming that the number of sheets of the produced printed matter is 10,000, a printing cost per copy of 2-color printing is 5 yen, and a printing cost per copy of 3-color printing is 7 yen, which means that the printing cost per copy is reduced with an increase in the number of copies.

Recently, so-called "digital printing", which is performed not by using artwork, but based on digital data represented by discrete numerical values, has been coming into wide use. Actually, however, the application of this technology is still limited to some particular fields because of its high running cost. In the case of "digital printing", the running cost is determined mainly by the amount of consumption of coloring materials required for printing. However, since the amount of consumption of coloring materials is proportional to the number of print copies, a printing cost per copy is not influenced by the number of copies. Therefore, when the number of print copies is small, "digital printing" becomes advantageous in terms of cost, differently from the conventional printing using artwork.

Therefore, a check on the limit of the number of print copies within which "digital printing" is more advantageous in terms of cost helps the user determine which printing method should be selected. However, the cost merit of "digital printing" changes considerably depending on image quality (resolution) and printing density, which makes it difficult to accurately predict a printing cost. Further, even if the printing cost can be predicted to some accurate degree by provisionally estimating the amount of coloring material to be consumed, actually, there has not been such a service (system) offered as a business which predicts (estimates) the printing cost.

Further, the coloring material, such as ink, which is used by a printing company is supplied in cartridges, and payment (of a price of coloring material) has been made for the supplied cartridges. For instance, when a color printing apparatus is used, a plurality of kinds of cartridges e.g. of M (magenta), C (cyan), Y (yellow), and K (black) are required for coloring printing, and the printing company has been placing an order of a necessary number of cartridges through management of the respective numbers of cartridges of colors in stock, and paying for the order of the cartridges.

In such a system, however, since an order of new cartridges is placed for replenishment of consumed ones, a printing company having a small number of cartridges in stock suffers from the shortage of cartridges if the printing company rapidly consumes a large amount of coloring material. Furthermore, a printing company located remote from an ink supplier company, the supply of cartridges tends to be delayed by the time required for delivery. In such a case, the delay of even one color of cartridges makes it impossible to operate the printing apparatus. Thus, the stock control of cartridges is a very important and burdensome work for the printing company.

Under these circumstances, to reduce the burden of stock control of ink cartridges on printing companies, there is an increasing need of a system which enables a supplier of coloring material to carry out the stock control for each company and efficiently and rapidly supply ink cartridges to the company.

### SUMMARY OF THE INVENTION

It is a first object of the invention to provide a printing cost calculation system that is capable of efficiently and rapidly calculating accurate printing cost, by calculating an amount of coloring material consumed by a printing apparatus, based on a digital image, and receiving information of the calculation via a network.

It is a second object of the invention to provide a coloring material supply management system that is capable of efficiently and rapidly supplying coloring material, by calculating an accurate amount of coloring material consumed by a printing apparatus, based on a digital image, and receiving information of the calculation via a network.

To attain the fist object, according to a first aspect of the invention, there is provided a printing cost calculation system for calculating a printing cost required for producing printed matter by a printing apparatus using at least one coloring material, based on a digital image represented by discrete numerical data.

The printing cost calculation system according to the first aspect of the invention is characterized by comprising:
digital image input means for inputting the digital image;
first calculation means for calculating an amount of the at least one coloring material to be consumed by the printing apparatus, based on the digital image inputted by the digital image input means;
information receiving means for receiving information of the amount of the at least one coloring material to be consumed calculated by the first calculation means, via a network; and
second calculation means for calculating the printing cost based on the information received by the information receiving means.

According to the printing cost calculation system, the amount of at least one coloring material to be consumed is calculated based on a digital image represented by discrete numerical data, and further, the printing cost is calculated based on this amount of the at least one coloring material. This makes it possible to estimate the printing cost accurately. More specifically, since printing performed based on a digital image does not need any use of artwork, printing cost required for the printing is indifferent to the number of colors, but depends on the amount of coloring materials actually used. Therefore, the printing cost calculation system of the invention, in which the printing cost is calculated based on the amount of at least one printing material to be actually consumed, is capable of calculating the printing cost accurately and efficiently. Further, the information of the amount of the at least one coloring material to be used is received via a network, and therefore, even at a place remote from a location where the printing apparatus is installed, it is possible to promptly calculate the printing cost.

Preferably, the printing cost calculation system further comprises color conversion means for carrying out color conversion of the digital image to a subtractive color mixture digital image which is expressed by a subtractive color process, when the digital image is an image expressed by an additive color process, and the digital image input means includes means for inputting the subtractive color mixture digital image obtained by the color conversion by the color conversion means.

According to this preferred embodiment, when the digital image is expressed by an additive color process using R (red), G (green), and B (blue), it is converted (color converted) to a subtractive color mixture digital image which is expressed by a subtractive color process using e.g. M (magenta), C (cyan), Y (yellow), and K (black). This color conversion makes it possible to calculate the amount of the at least one coloring material to be consumed based on the subtractive color mixture digital image expressed by colors (e.g. M, C, Y, K.) of the coloring materials which are to be actually used by the subtractive color process in the production of the printed matter, and therefore, the printing cost can be calculated more accurately.

Preferably, the printing cost calculation system further comprises pseudo gradation means for carrying out pseudo-gradation processing on the digital image by a dither method, and the first calculation means includes gradation-specific amount calculation means for calculating gradation-specific amounts of the at least one coloring material to be consumed.

According to this preferred embodiment, pseudo-gradation processing is carried out on the digital image by the dither method generally used as a method of gradation processing, and gradation-specific amounts of the at least one coloring material are calculated, whereby the amount of the at least one coloring material to be consumed for production of the printed matter can be calculated based on the gradation-specific amounts of the at least one coloring material (i.e. by calculating a total of the gradation specific amounts). In short, it is possible to calculate the amount of the at least one coloring material to be actually consumed for production of the printed matter, by data processing which is of a general type and easy to employ.

Preferably, the printing apparatus is capable of carrying out printing in dots having a plurality of dot sizes, and the first calculation means includes means for calculating amounts of the at least one coloring material to be consumed, on a dot size-by-dot size basis.

According to this preferred embodiment, when the printing apparatus performs printing in dots having a plurality of dot sizes, the amount of the at least one coloring material to be consumed can be calculated not only based on the number of dots, but also based on dot sizes. Therefore, when dots are different in size, it is possible to calculate the printing cost more accurately.

Preferably, the printing cost calculation system further comprises copy number-designating means for designating a number of copies of the printed matter, and the second calculation means calculates the printing cost according to the number of copies designated by the copy number-designating means.

According to this preferred embodiment, it is possible to calculate the printing cost by taking the specified number of copies into account. It should be noted that the phrase "according to the number of copies designated" used here and in corresponding claims appended hereto encompasses meaning of "according to a result of the calculation of multiplying a printing cost per copy by the number of copies" which is based on the fact that since the amount of the at least one coloring material to be consumed is proportional to the number of copies, the printing cost is also proportional to the number of copies, as well as meaning of "according to a result of the calculation of subtracting a quantity discount offered in accordance with an increase in the number of copies from the result of calculation of multiplying the printing cost per copy by the number of copies".

More preferably, the second calculation means includes means for calculating a printing cost per copy of the printed matter, and means for calculating a total printing cost of the copies of the printed matter whose number has been designated by the copy number-designating means.

According to this preferred embodiment, it is possible to calculate not only the cost per copy (unit price) of the printed matter but also the total cost (total price) of the printed matter corresponding to the specified number of copies.

Preferably, the printing cost calculation system further comprises storage means for storing a coloring material price table associating amounts of the at least one coloring material to be consumed with respective prices thereof, and the second calculation means includes means for calculating the printing cost by looking up the coloring material price table stored in the storage means.

According to this preferred embodiment, it is possible to calculate the printing cost by looking up the coloring material cost table associating amounts of the at least one coloring material to be consumed with respective prices thereof. In short, it is possible to calculate the printing cost without any need to use a complicated calculation program.

Preferably, the printing cost calculation system further comprises storage means for storing a color-specific coloring material prices table associating respective amounts of different colors of coloring materials with respective prices thereof, and the first calculation means includes means for calculating color-specific amounts of the at least one coloring material to be consumed, on a color-by-color basis, the second calculation means including means for calculating the printing cost by looking up the color-specific coloring material prices table stored in the storage means.

According to this preferred embodiment, when the digital image is expressed in a plurality of colors (in color), it is possible to calculate the printing cost by looking up the color-specific coloring material prices table associating respective amounts of different colors of coloring materials with respective prices thereof. In short, even when the prices of unit amounts of the coloring materials vary with the colors of the coloring materials, it is possible to calculate the printing cost without any need to use a complicated calculation program.

More preferably, the prices are changeable in a floating manner.

According to this preferred embodiment, even when the kind of the coloring materials is changed, or even when the prices (unit prices) of the coloring materials are being changed in a floating manner depending on various conditions, it is possible to calculate the printing cost in accordance with the changes in prices (unit prices) of the coloring materials. In short, accurate calculation of the printing cost is possible.

Preferably, the information receiving means is capable of receiving the information at a desired time or at all times.

According to this preferred embodiment, the information receiving means can receive the information of the amount of the at least one coloring material to be consumed according to needs on the information-receiving side, which enables more efficient calculation of the printing cost.

Preferably, the network is constructed by an internet or a LAN.

According to this preferred embodiment, since an existing network constructed by an internet (such as the Internet) or a LAN can be utilized, it is not required to construct a new network. Further, utilization of a WAN, such as the Internet, makes it possible to readily perform business operation over a further-expanded area.

Preferably, the at least one coloring material includes ink or toner.

According to this preferred embodiment, when ink or toner is used for printing, it is possible to utilize the present system which enables efficient calculation of the printing cost.

Preferably, the printing apparatus includes an ink jet printer or an electrophotographic printer.

According to this preferred embodiment, when an ink jet printer or an electrophotographic printer is used for producing the printed matter, it is possible to utilize the present system which enables efficient calculation of the printing cost.

Preferably, the first calculation means includes means for calculating the amount of the at least one coloring material to be consumed, by adding an amount of the at least one coloring material to be consumed for other purposes than a purpose of production of the printed matter.

According to this preferred embodiment, it is possible to calculate the amount of the at least one coloring material to be consumed, taking into account the amount to be consumed for other purposes than the purpose of production of the printed matter. That is, an accurate printing cost corresponding to the amount of the at least one coloring material to be actually used by the printing apparatus can be calculated.

More preferably the amount of the at least one coloring material to be consumed for other purposes than the purpose of production of the printed matter includes an amount of the at least one coloring material to be consumed for operation of maintenance service for the printing apparatus.

According to this preferred embodiment, the amount of the at least one coloring material to be consumed can be calculated by taking into account (adding thereto) the amount thereof to be consumed for maintenance service. That is, an accurate printing cost corresponding to the amount of the at least one coloring material to be actually used by the printing apparatus can be calculated.

More preferably, the printing apparatus includes an ink jet printer including an ink jet head having nozzles for ejecting ink therefrom, and the amount of the at least one coloring material to be consumed for other purposes than the purpose of production of the printed matter includes an amount of ink to be consumed for automatic cleaning executed by sucking the ink from the nozzles of the ink jet head.

According to this preferred embodiment, when the printing apparatus is an ink jet printer, the amount of the coloring material to be consumed can be calculated by taking into account (adding thereto) the amount of ink to be consumed for the automatic cleaning executed to preserve excellent ink-ejecting conditions of the ink jet head (to prevent clogging of nozzles of the head). That is, an accurate printing cost corresponding to the amount of the at least one coloring material to be actually used by the printing apparatus can be calculated.

More preferably, the printing apparatus includes an ink jet printer including an ink jet head having nozzle for ejecting ink therefrom, and the amount of the at least one coloring material to be consumed for other purposes than the purpose of production of the printed matter includes an amount of ink to be consumed for periodical flushing executed by ejecting the ink periodically from the nozzle of the ink jet head.

According to this preferred embodiment, when the printing apparatus is an ink jet printer, the amount of the coloring material to be consumed can be calculated by taking into account (adding thereto) the amount of ink to be consumed for the periodical flushing executed periodically to prevent drying of ink in the nozzles of the ink jet head. That is, an accurate printing cost corresponding to the amount of the at least one coloring material to be actually used by the printing apparatus can be calculated.

To attain the first object, according to a second aspect of the invention, there is provided a printing cost calculation system comprising:
a user terminal capable of calculating an amount of at least one coloring material to be consumed by a printing apparatus for producing printed matter, based on a digital image represented by discrete numerical data, and transmitting information of the amount of the at least one coloring material to be consumed; and
a host terminal capable of receiving the information of the amount of the at least one coloring material to be consumed, via a network, and calculating a printing cost for producing the printed matter, based on the received information, the host terminal transmitting information of the printing cost to the user terminal.

According to this printing cost calculation system, since the user terminal calculates an amount of at least one coloring material to be consumed for producing printed matter based on a digital image represented by discrete numerical data, it is possible to calculate the printing cost more accurately. Further, the host terminal can receive the information of the amount of the at least one coloring material to be consumed, via the network, it is possible to calculate the printing cost efficiently and promptly even when the host terminal is located remote from the user terminal (i.e. a place where the printing apparatus is installed). Moreover, the host terminal can transmit information of the printing cost to the user terminal. This enables the user terminal to check the information of the printing cost.

Preferably, the host terminal carries out an order process for placing an order for supply of the at least one coloring material to the printing apparatus, based on the information of the amount of the at least one coloring material to be consumed received via the network.

According to this preferred embodiment, the host terminal executes the order process for placing an order for supply of the at least one coloring material to the printing apparatus, based on the amount of the at least one coloring material to be consumed received from the user terminal. Therefore, the user terminal is not required to manage consumption of the at least one coloring material. On the other hand, the host terminal can carry out calculation of the printing cost and the order process for placing an order for supply of the at least one coloring material simultaneously, which makes it possible to enhance operational efficiency. It should be noted that the phrase "order process for placing an order for supply of the at least one coloring material" is intended to mean processing for instructing another person (another company) to supply one or more coloring materials and electronic processing (document production) for the supply.

To attain the second object, according to a second aspect of the invention, there is provided a coloring material supply management system for managing supply of at least one coloring material to a printing apparatus that produces printed matter by using the at least one coloring material, based on a digital image represented by discrete numerical data.

The coloring material supply management system according to the second aspect of the invention is characterized by comprising:
digital image input means for inputting the digital image;
calculation means for calculating an amount of the at least one coloring material to be consumed by the printing apparatus for producing the printed matter based on the digital image inputted by the digital image input means;
information receiving means for receiving information of the amount of the at least one coloring material to be consumed calculated by the calculation means, via a network; and
supply instruction means for instructing the supply of the at least one coloring material to the printing apparatus, based on the information received by the information receiving means.

According to the coloring material supply management system, the amount of the at least one coloring material to be consumed is calculated based on a digital image represented by discrete numerical data, and therefore, it is possible to calculate the amount accurately. Further, the information of the at least one coloring material to be consumed can be received via a network, and based on the information, the supply of the at least one coloring material can be instructed. This makes it possible to grasp the amount of the at least one coloring material to be consumed, and at the same time efficiently and promptly instruct the supply of the at least one coloring material, at a location remote from a place where the printing apparatus is installed.

Preferably, the coloring material supply management system further comprises color conversion means for carrying out color conversion of the digital image to a subtractive color mixture digital image which is expressed by a subtractive color process, when the digital image is an image expressed by an additive color process, and the digital image input means includes means for inputting the subtractive color mixture digital image obtained by the color conversion by the color conversion means.

According to this preferred embodiment, when the digital image is expressed by an additive color process using R (red), G (green), and B (blue), it is converted (color converted) to a subtractive color mixture digital image which is expressed by a subtractive color process using e.g. M (magenta), C (cyan), Y (yellow), and K (black). This color conversion makes it possible to calculate the amount of the at least one coloring material to be consumed based on the subtractive color mixture digital image expressed by colors (e.g. M, C, Y, K.) of the coloring materials which are to be actually used by the subtractive color process in the production of the printed matter.

Preferably, the coloring material supply management system further comprises pseudo gradation means for carrying out pseudo-gradation processing on the digital image by a dither method, and the calculation means includes gradation-specific amount calculation means for calculating gradation-specific amounts of the at least one coloring material to be consumed.

According to this preferred embodiment, pseudo-gradation processing is carried out on the digital image by the dither method generally used as a method of gradation processing, and gradation-specific amounts of the at least one coloring material are calculated, whereby the amount of the at least one coloring material to be consumed for production of the printed matter can be calculated based on the gradation-specific amounts of the at least one coloring material (i.e. by calculating a total of the gradation specific amounts). Thus, it is possible to calculate the amount of the at least one coloring material to be actually consumed for production of the printed matter, by data processing which is of a general type and easy to employ.

Preferably, the printing apparatus is capable of carrying out printing in dots having a plurality of dot sizes, and the calculation means includes means for calculating amounts of the at least one coloring material to be consumed, on a dot size-by-dot size basis.

According to this preferred embodiment, when the printing apparatus carries out printing in dots having a plurality of dot sizes, the amount of the at least one coloring material to be consumed can be calculated not only based on the number of dots, but also based on dot sizes. That is, even when dots are different in size, accurate calculation of the printing cost is possible.

Preferably, the coloring material supply management system further comprises copy number-designating means for designating a number of copies of the printed matter, and the calculation means calculates the amount of the at least one coloring material to be consumed according to the number of copies designated by the copy number-designating means.

According to this preferred embodiment, it is possible to calculate the amount of the at least one coloring material to be consumed corresponding to the designated number of copies into account. That is, the amount of the at least one coloring material to be consumed can be calculated by multiplying the amount of the at least one coloring material to be consumed per copy of the printed matter by the designated number of copies of the same.

Preferably, the printing apparatus includes a printing apparatus using coloring materials of a plurality of colors, and the calculation means includes means for calculating amounts of the coloring materials to be consumed, on a color-by-color basis, the supply instruction means including means for issuing instructions for supply of the coloring materials on a color-by-color basis.

According to this preferred embodiment, when the printing apparatus uses a plurality of coloring materials having different colors (when it is capable of color printing), it is possible to calculate the respective amounts of the coloring materials of the different colors. That is, the supply of the at least one coloring material can be carried out, in a manner classified according to the colors thereof.

Preferably, the information receiving means is capable of receiving the information at a desired time or at all times.

According to this preferred embodiment, the information receiving means can receive the information of the amount of the coloring material to be consumed at a desired time or at all times. This enables the information to be received according to needs on the information receiving side. That is, the supply of the at least one coloring material can be instructed more efficiently.

Preferably, the coloring material supply management system further comprises maintenance service instruction means for issuing an instruction for execution of maintenance service for the printing apparatus when the maintenance service instruction means has detected, based on the information received by the information receiving means, that a cumulative amount of the at least one coloring material to be consumed has reached a predetermined amount.

According to this preferred embodiment, when it is detected based on the information received from the information receiving means that a cumulative amount of the at least one coloring material to be consumed has reached a predetermined amount, an instruction for execution of maintenance service for the printing apparatus can be issued. In other words, by providing the maintenance service according to the cumulative amount of the at least one coloring material to be consumed, the inspection of the printing apparatus can be carried out at an appropriate time and the parallel execution of the supply of the at least one coloring material and maintenance service can enhance the working efficiency.

More preferably, the coloring material supply management system further comprises maintenance consumption amount-calculating means for calculating an amount of the at least one coloring material to be consumed for operation of the maintenance service, and the supply instruction means includes means for issuing an instruction for supply of the at least one coloring material in an amount incorporating the amount of the at least one coloring material calculated by the maintenance consumption amount-calculating means when the maintenance service instruction means has issued the instruction for execution of maintenance service.

According to this preferred embodiment, the amount of the at least one coloring material to be consumed for the operation of the maintenance can be calculated, and can be grasped. Further, when the instruction for the maintenance service is issued, the supply of the at least one coloring material can be instructed by adding the amount of the at least one coloring material to be consumed for the operation of the maintenance to the amount of the same to be consumed for production of the printed matter. That is, the supply of the at least one coloring material can be carried out in an accurate amount corresponding to the amount of the at least one coloring material to be consumed by the printing apparatus.

Preferably, the network is constructed by an internet or a LAN.

According to this preferred embodiment, since an existing network constructed by an internet (such as the Internet) or a LAN can be utilized, it is not required to construct a new network. Further, utilization of a WAN, such as the Internet, makes it possible to readily perform business operation over a further-expanded area.

Preferably, the at least one coloring material includes ink or toner.

According to this preferred embodiment, when ink or toner is used for printing, it is possible to utilize the present system which enables efficient and prompt instruction of the supply of the at least one coloring material.

Preferably, the printing apparatus includes an electrophotographic printer.

According to this preferred embodiment, when an electrophotographic printer is used for producing the printed matter, it is possible to utilize the present system which enables efficient and prompt instruction of the supply of the at least one coloring material.

Preferably, the printing apparatus includes an ink jet printer including an ink jet head having nozzles for ejecting ink therefrom.

According to this preferred embodiment, when an ink jet printer is used for producing the printed matter, it is possible to utilize the present system which enables efficient and prompt instruction of the supply of the at least one coloring material.

More preferably, the coloring material supply management further comprises automatic cleaning consumption amount-calculating means for calculating an amount of the at least one coloring material to be consumed for automatic cleaning executed by sucking the ink from the nozzles of the ink jet head, and the supply instruction means includes means for issuing an instructing for supply of the at least one coloring material in an amount incorporating the amount of the at least one coloring material calculated by the automatic cleaning consumption amount-calculating means.

According to this preferred embodiment, the amount of ink to be consumed for the automatic cleaning executed to preserve excellent ink-ejecting conditions of the ink jet head (to prevent clogging of nozzles of the head) can be calculated and grasped. Further, the instruction for supply of the at least one coloring material can be issued by adding the amount of ink to be consumed for the automatic cleaning to the amount of the same to be consumed for the production of the printed matter. That is, it is possible to supply a more accurate amount of the at least one coloring material corresponding to the amount of the at least one coloring material to be actually used by the printing apparatus.

More preferably, the coloring material supply management system further comprises maintenance service instruction means for issuing an instruction for execution of maintenance service for the printing apparatus when the maintenance service instruction means has detected that a cumulative amount of the amount of the at least one coloring material calculated by the automatic cleaning consumption amount-calculating means has reached a predetermined amount.

According to this preferred embodiment, when it is detected that a cumulative amount of the amount of the at least one coloring material to be consumed for the automatic cleaning has reached a predetermined amount, an instruction for execution of maintenance service for the printing apparatus is issued. This makes it possible to carry out the replacement of consumables or members to be consumed by the automatic cleaning at an appropriate time.

More preferably, the coloring material supply management system further comprises periodical flushing consumption amount-calculating means for calculating an amount of the at least one coloring material to be consumed for periodical flushing executed by ejecting the ink periodically from the nozzles of the ink jet head, and the supply instruction means includes means for issuing an instructing for supply of the at least one coloring material in an amount incorporating the amount of the at least one coloring material calculated by the periodical flushing consumption amount-calculating means.

According to this preferred embodiment, it is possible to calculate and grasp the amount of the at least one coloring material to be consumed for periodical flushing executed by ejecting the ink periodically from the nozzles of the ink jet head to prevent drying of ink within the nozzles. Further, the instruction for supply of the at least one coloring material can be issued by adding the amount of ink to be consumed for the periodical flushing to the amount of the same to be consumed for the production of the printed matter. That is, it is possible to supply a more accurate amount of the at least one coloring material be actually used by the printing apparatus.

More preferably, the coloring material supply management system further comprises maintenance service instruction means for issuing an instruction for execution of maintenance service for the printing apparatus when the maintenance service instruction means has detected that a cumulative amount of the amount of the at least one coloring material calculated by the periodical flushing consumption amount-calculating means has reached a predetermined amount.

According to this preferred embodiment, when it is detected a cumulative amount of the amount of the at least one coloring material calculated by the periodical flushing consumption amount-calculating means has reached a predetermined amount, an instruction for execution of maintenance service for the printing apparatus is issued. This makes it possible to carry out the replacement of consumables or members to be consumed by the periodical flushing at an appropriate time.

To attain the second object, according to a fourth aspect of the invention, there is provided a coloring material supply management system comprising:
a user terminal capable of calculating an amount of at least one coloring material to be consumed by a printing apparatus for producing printed matter based on a digital image represented by discrete numerical data, and transmitting information of the amount of the at least one coloring material to be consumed; and
a host terminal capable of receiving the information of the amount of the at least one coloring material to be consumed, via a network, and issuing an instructing for supply of the at least one coloring material to the printing apparatus,
the host terminal executing an order process for placing an order for the supply of the at least one coloring material to the printing apparatus, based on the information of the amount of the at least one coloring material to be consumed, and transmitting information of a schedule for the supply of the at least one coloring material, to the user terminal.

According to this coloring material supply management system, the user terminal calculates the amount of at least one coloring material to be consumed by a printing apparatus for producing printed matter, based on a digital image represented by discrete numerical data. This makes it possible to calculate an accurate amount of the at least one coloring material to be consumed. Further, the host terminal receives the information of the amount of the at least one coloring material to be consumed which is sent via the network from the user terminal. This makes it possible to carry out an order process of ordering the supply of the at least one coloring material, efficiently and promptly even at a location remote from a place where the printing apparatus is installed. Further, the host terminal transmits the information of a schedule of the supply of the at least one coloring material to the user terminal, and hence the schedule can be grasped at the user terminal. It should be noted that the phrase "order process for placing an order for supply of the at least one coloring material" is intended to mean processing for instructing another person (another company) to supply one or more coloring materials and electronic processing (document production) for the supply.

To attain the second object, according to a fifth aspect of the invention, there is provided a coloring material supply management system comprising:
a user terminal capable of calculating an amount of at least one coloring material to be consumed by a printing apparatus for producing printed matter, based on a digital image represented by discrete numerical data, and transmitting information of the amount of the at least one coloring material to be consumed; and
a host terminal capable of receiving the information of the amount of the at least one coloring material to be consumed, via a network, and issuing an instruction for supply of the at least one coloring material to the printing apparatus,
the host terminal transmitting information of a schedule for the supply of the at least one coloring material to the user terminal, based on the information of the amount of the at least one coloring material to be consumed, received from the user terminal,
the user terminal transmitting information of a request of the supply of the at least one coloring material to the host terminal, based on the information of the schedule for the supply of the at least one coloring material, received from the host terminal,
the host terminal executing an order process for placing an order for the supply of the at least one coloring material to the printing apparatus, based on the information of the request of the supply of the at least one coloring material, received from the user terminal.

According to this coloring material supply management system, the host terminal transmits information of a schedule for the supply of the at least one coloring material to the user terminal, based on the information of the amount of the at least one coloring material to be consumed, received from the user terminal. In response to this, the user terminal transmits information of a request of the supply of the at least one coloring material to the host terminal. In response to this information, the host terminal executes an order process for placing an order for the supply of the at least one coloring material to the printing apparatus. That is, the ordering process for the supply of the at least one coloring material is carried out after exchanging the information concerning a supply schedule and a request for the supply between the user terminal and the host terminal. This prevents an error in the supply of the at least one coloring material and like troubles. It should be noted it is preferred that the information of a request for the supply of the at least one coloring material includes either information of "acceptance of the supply" or information of "no acceptance of the supply", and the host terminal carries out the order process, when the information of "acceptance of the supply" is received.

Preferably, when the host terminal has detected, based on the information of the at least one coloring material to be consumed, that a cumulative amount of the amount of the at least one coloring material to be consumed has reached a predetermined amount, the host terminal carries out an order process for placing an order for maintenance service for the printing apparatus, and transmits information of a schedule of execution of the maintenance service to the user terminal.

According to the preferred embodiment, the host terminal carries out an order process for placing an order for maintenance service for the printing apparatus, when the host terminal has detected that a cumulative amount of the amount of the at least one coloring material to be consumed has reached a predetermined amount. This enables the inspection of the printing apparatus to be carried out at an appropriate time, and the parallel execution of the supply of the at least one coloring material and maintenance service can enhance the working efficiency. Further, the host terminal transmits information of a schedule of execution of the maintenance service to the user terminal, so that the schedule of execution of the maintenance service can be checked or confirmed at the user terminal

The above and other objects, features, and advantages of the invention will become more apparent from the following detailed description taken in conjunction with the accompanying drawings.

### BRIEF DESCRIPTION OF THE DRAWINGS

FIG. 1 is a diagram showing a system configuration of a printed matter-issuing system including a coloring material supply management system according to an embodiment of the invention;
FIG. 2 is an explanatory diagram of a schematic flow of operations of the printed matter-issuing system;
FIG. 3 is an explanatory diagram of "printing cost estimate request list" which can be checked by both a printing company and a management company;
FIG. 4 is an explanatory diagram of "calculated printing cost estimate list" which can be checked by both the printing company and the management company;
FIG. 5 is a diagram showing an example of an "ink consumption list <monthly total>" which can be checked by both the printing company and the management company;
FIG. 6 is a diagram showing an example of an "ink consumption list <annual total>" which can be checked by both the printing company and the management company;
FIG. 7 is a diagram showing an example of an "ink supply schedule list" which can be checked by the management company;
FIG. 8 is a diagram showing an example of a "maintenance schedule list" which can be checked by the management company;
FIG. 9A is a diagram showing an example of a "dot size-specific ink consumption table";
FIG. 9B is a diagram showing an example of a "color-specific ink unit price table";
FIG. 10 is a diagram showing an example of a printed matter issued by the printed matter-issuing system;
FIGS. 11A and 11B is an explanatory diagram illustrating an example of a method of calculating an estimated number of times of ink ejection, which is employed in the present embodiment; and
FIG. 12 is an explanatory diagram showing an example of a method of calculating the estimated amount of ink consumed.

### DETAILED DESCRIPTION OF THE PREFERRED EMBODIMENT

The invention will now be described in detail with reference to drawings showing an embodiment thereof, in which a printing cost calculation system and a coloring material supply management system according to the invention are applied to a printed matter-issuing system 1.

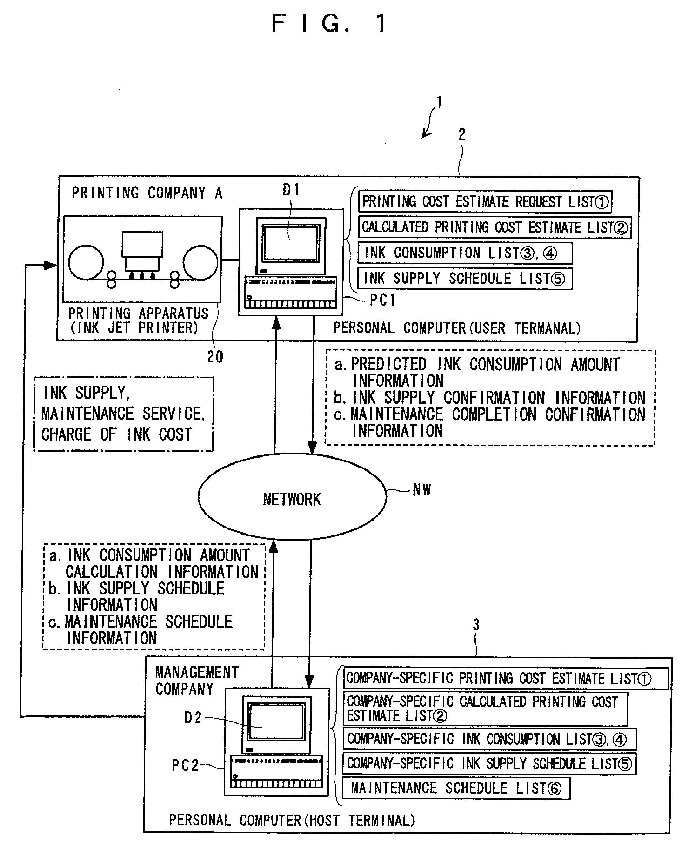

Referring first to FIG. 1, the printed matter-issuing system 1 is comprised of a management company 3 which operates/manages the present system 1, a network NW, and a plurality of printing companies 2 (only one of which is shown in the figure) each of which communicates with the management company 2 via the network NW, for transmitting and receiving various kinds of information, and produces printed matter (i.e. consumes ink). The management company 3 receives from each of the printing companies 2 information of the predicted amount of ink (coloring material) to be consumed by a printing apparatus 20, to thereby control the supply of ink and maintenance and makes a charge for ink cost (printing cost).

The printing company 2 is comprised of the printing apparatus 20 for producing printed matter and a personal computer 1 (user terminal: hereinafter referred to as "the PC 1") connected to the printing apparatus 20 via an interface and used for communication via the network NW. The printing apparatus 20 is implemented by an ink jet printer which ejects ink particles from a plurality of thin nozzles formed in an ink jet head, to thereby carry out printing on a print medium brought to a position opposed to the nozzles. The PC 1 receives input of a digital image 6, and calculates a predicted amount of ink to be consumed based on the input digital image 6, while displaying the information of the image and the calculated amount on a display D1.

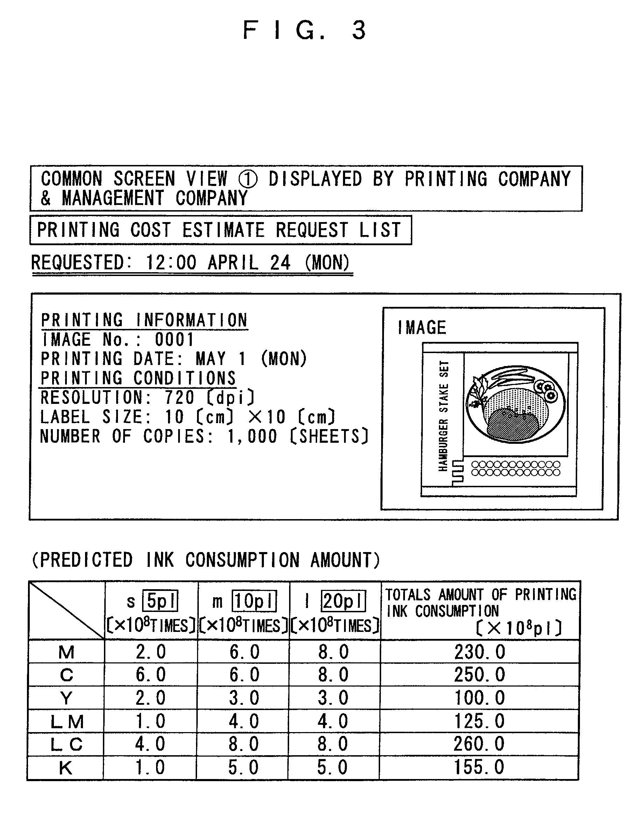

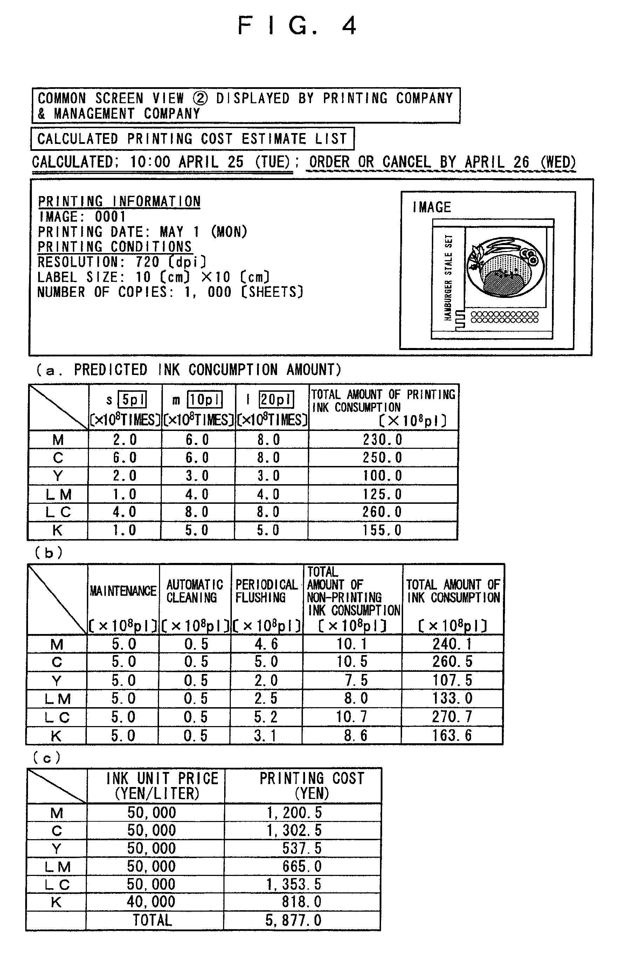

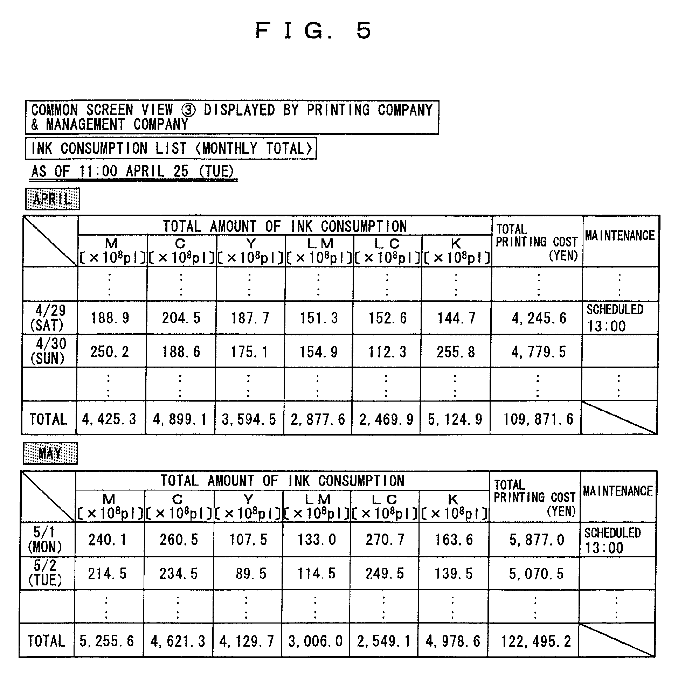

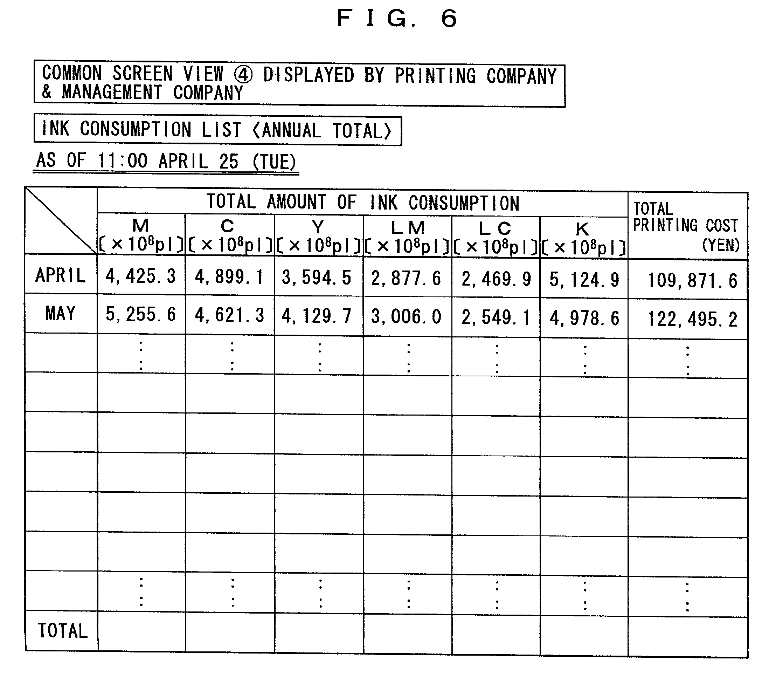

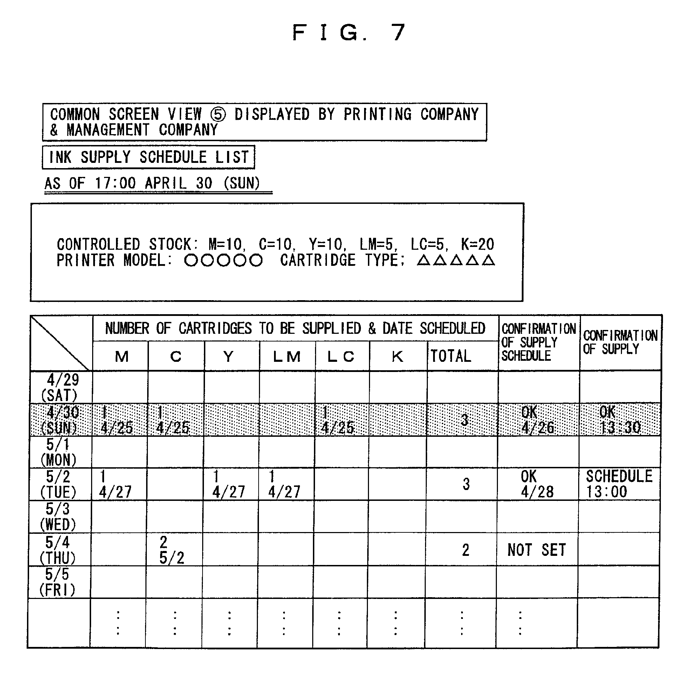

Further, the PC 1 transmits the information of the predicted amount of ink to be consumed by the ink jet printer 20, information confirming that ink has been supplied to the ink jet printer 20, and information confirming that maintenance service has been executed (hereinafter referred to as "a. predicted ink consumption amount information", "b. ink supply confirmation information" and "c. maintenance completion confirmation information", respectively) to the management company 3. Moreover, the PC 1 is capable of displaying various kinds of information from the management company 3 on the display D1. The contents of the information displayed are exemplified in a "printing cost estimate request list" shown in FIG. 3, a "calculated printing cost estimate list" shown in FIG. 4, "ink consumption lists" shown in FIG. 5 and 6, and an "ink supply schedule list" shown in FIG. 7, all of which will be described in detail hereinafter.

The management company 3 has a personal computer 2 (host terminal: hereinafter referred to as "the PC 2") capable of performing communication with the PC 1 of the printing company 2 via the network NW. The management company 3 receives the information of the predicted amount of ink to be consumed from the printing company 2 and performs various management operations based on the information received from the printing company 2. More specifically, the management company 3 (PC 2) sends to the printing company 2 (PC 1) an estimate of printing cost calculated based on "a. predicted ink consumption amount information" received from the printing company 2, information of an ink supply schedule, and information of an execution schedule for maintenance service (hereinafter referred to as "a. calculated printing cost estimate information", "b. ink supply schedule information" and "c. maintenance schedule information" , respectively). Further, the management company 3 supplies ink (cartridges) to the printing company 2, executes maintenance service for the same, and charges the same for the supplied ink (ink cartridges).

Similarly to the PC 1, the PC 2 is capable of displaying various kinds of information on a display D2 thereof. The contents of the information displayed are exemplified in the "printing cost estimate request list" shown in FIG. 3, the "calculated printing cost estimate list" shown in FIG. 4, the "(company-specific) ink consumption lists" shown in FIG. 5 and 6, and the "(company-specific) ink supply schedule list" shown in FIG. 7, all of which will be described in detail hereinafter.

The network NW is implemented by the Internet or a LAN. The utilization of an existing network system makes it possible to eliminate the need for constructing a new network. Further, utilization of a WAN such as the Internet makes it possible to easily perform business operation over a further-expanded area. Needless to say, it is also possible to construct a new network for the present system 1.

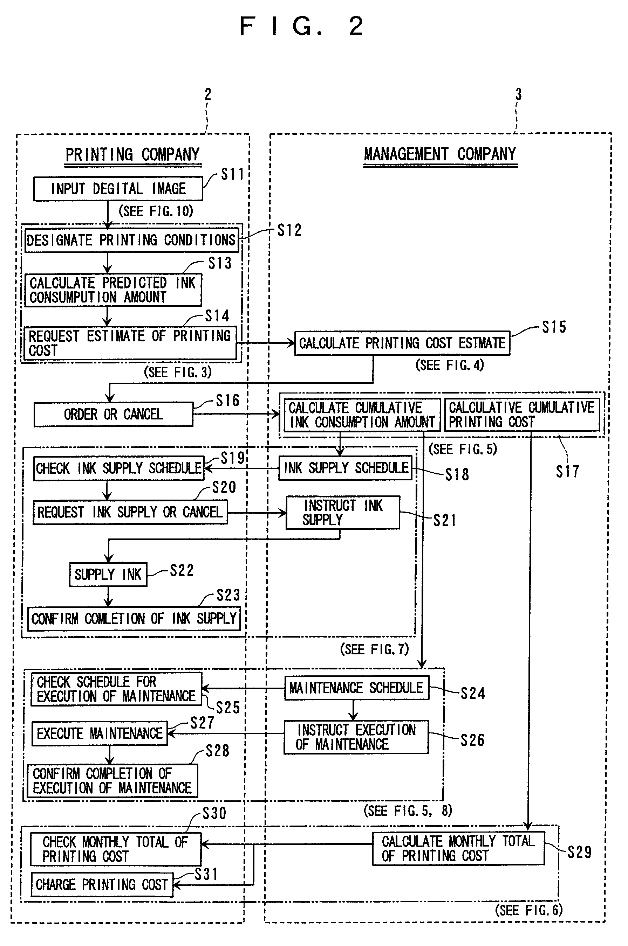

Now, an outline of the whole flow of operations of the printed matter-issuing system 1 will be described with reference to FIG. 2. As described above, the management company 3 receives from the printing company 2, information of the predicted amount of ink expected to be consumed by the printing apparatus 20 via the network NW, and based on the received information, carries out various kinds of management operations, such as instruction of supply of ink, instruction of execution of maintenance service, and calculation of a price of the supplied in and charging therefor (printing cost) and issuing a charge of ink. Therefore, in the following, description will be mainly given of details of transmission and reception of information between the printing company 2 and the management company 3.

As shown in FIG. 2, in the printing company, a digital image 6 as an object to be printed is input to the PC1 (S11). Then, printing conditions of the digital image 6 (resolution, label size, number of labels, etc.) are designated by a user (S12), and based on the information, a predicted amount of ink to be consumed is calculated (S13). Then, the printing company 2 sends a request of estimation of a printing cost based on the information, to the management company (S14; see FIG. 3). The request is made through the network NW, and upon reception of the request, the management company 3 calculates an estimate of the printing cost based on the information received from the printing company (S15; see FIG. 4).

Then, the management company 3 sends information of calculation (results) of the estimate of the printing cost to the printing company 2. In response thereto, the printing company 2, if the estimate is acceptable, sends an order of ink to the management company 3, whereas if not, sends information of cancellation to the same (S16). If the order has been made by the printing company, the management company adds the information of the predicted amount of ink to be consumed and the calculated printing cost estimate to respective totals of the amount of ink consumed and the printing cost (S17; see FIGS. 5 and 6).

Thereafter, based on the cumulative total of ink consumption amount, the management company 3 instructs supply of ink (S21) and execution of maintenance service (S26), and based on the cumulative total of the printing cost, charges the printing company for the printing cost (S31). First, as to the instruction of supply of ink, the management company 3 sends information of a schedule of supply of ink (scheduled supply date, details of supply) to the printing company 2 (S18). The printing company 2 checks on the information (S19), and if the supply of ink is acceptable, the company 2 sends information to this effect to the management company 3 (S20). In response to the information, the management company 3 instructs the supply of ink (S21), and executes the supply of ink (actually, in the form of cartridges) (S22). Then, when the ink has been supplied, the printing company 2 sends information confirming the supply of ink to the management company 3 (S23; see FIG. 7).

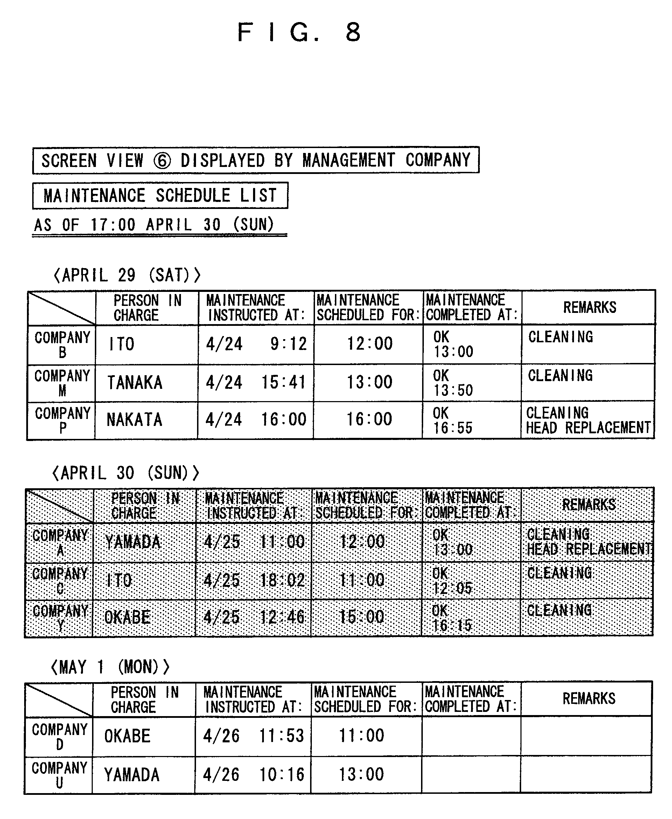

On the other hand, as to the instruction of execution of maintenance service, the management company 3 sends out information of a schedule of execution of maintenance (S24), and the printing company checks on this (S25). At the same time, the management company 3 instructs execution of maintenance (S26), and the maintenance is executed accordingly (S27). Then, when the maintenance service has been carried out, the printing company 2 sends information confirming the execution of maintenance service (S28; see FIGS. 5 and 8). That is, as far as the maintenance service is concerned, the management company 3 does not ask the printing company 2 as to whether the execution thereof is acceptable or not.

Further, the charging of printing cost is carried out based on the monthly total of printing cost, and hence the management company 3 calculates a monthly total of printing cost (S29; see FIG. 69) every month. Then, the management company 3 sends out information of the monthly total of printing cost, and the printing company checks on this (S30). Further, the management company 3 charges the printing company for the printing cost (S31). As described above, the information is sent and received between the printing company 2 and the management company 3, and the sent and received information can be displayed on the displays D1, D2 by both the companies, respectively (only the "maintenance schedule list" shown in FIG. 8 can be viewed on the display D2 by the management company 3 alone). Further, check and confirmation as to the order in response to the estimated printing cost and the necessity of ink supply are also carried out via the displays D1, D2.

Now, the printing apparatus 20 used by the printing company 2 will be described. In the present embodiment, as described hereinabove, the printing apparatus 20 is implemented by an ink jet printer which is capable of color printing. The printing apparatus 20 carries out printing on a print medium by ejecting ink from the ink jet head (nozzles), to thereby produce printed matter. Printing ink for use in the apparatus 20 includes six color inks of M (magenta) color, C (cyan), Y (yellow), LM (light magenta), LC (light cyan), and K (black), each of which is provided in a state contained in an ink cartridge. Therefore, when an ink is running out, it is not required to supply all the six inks, but it is possible to supply (replenish) only the insufficient ink.

Shortage of ink is determined for the ink jet printer 20 by the printing company side (PC1) based on the amount of ink ejected from (nozzles of) an ink jet head of the printer 20 (the amount of ink actually consumed or to be actually consumed). The method of calculation of the amount of ink actually consumed will bed described hereinafter. More specifically, when cartridges each containing 1 liter of ink are in use, the amount of ink remaining in each of the ink cartridges is calculated by subtracting the amount of ink consumed from the ink cartridge from the initial amount of ink, and if the calculated amount is very close to 0 (liters), it is determined that the ink is insufficient. A cartridge which is short of ink is removed by a user for replacement with a new one. The ink jet printer 20 suspends the printing process during the replacement operation, and resumes the printing process immediately after completion of the loading of the new cartridge has been detected.

Immediately before the restart of the printing process, the ink jet printer 20 carries out "automatic cleaning" to maintain excellent ink ejection from the ink jet head (nozzles) (i.e. to prevent nozzle clogging by ink). The "automatic cleaning" is performed by moving the ink jet to a home position thereof from a position opposed to a print medium, and bringing an ink suction cap into contact with the ink jet head from below to suck ink therefrom in the state. The sucked ink is collected in a waste ink storage tank connected to the ink suction cap. Therefore, it is preferred that when the amount of waste ink stored in the waste ink storage tank has exceeded a predetermined amount, a serviceman removes the waste ink from the tank during execution of maintenance service. It should be noted that the "automatic cleaning" is executed not only after replacement of cartridges (or before restart of a printing process) but also immediately after the power is turned on. Further, when blur of print is becoming conspicuous, the user can provide an instruction to forcibly carry out "automatic cleaning".

In addition to the "automatic cleaning", the ink jet printer 2 carries out "periodical flushing" by ejecting a predetermined amount of ink periodically, so as to prevent nozzle clogging (or to prevent ink from being dried). The "periodical flushing" is executed by ejecting the predetermined amount of ink at time intervals of 10 to 20 seconds during a printing process, in a state of the ink jet head having been moved to an ink disposal position. Arranged at the ink disposal position is a waste ink storage container filled with a waste ink absorber. The ejected ink is absorbed in the waste ink absorber. Therefore, it is preferred that when the waste ink absorber is saturated with waste ink, a serviceman removes the waste ink absorber during execution of maintenance service and replaces the same with a new one. It should be noted that the periodical flushing can also be carried out by ejecting ink toward a non-image portion of a print medium, so as to shorten a time period for moving the ink jet head to the ink disposal position.

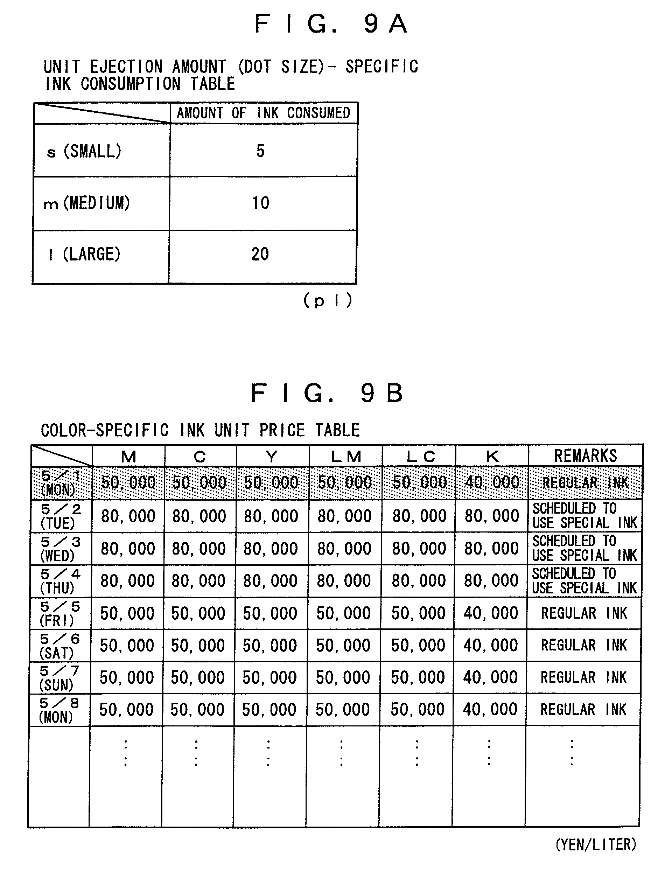

Next, description will be given of the method of calculating the amount of ink ejected by the ink jet printer 20 (the amount of ink actually consumed). As shown in a "dot size-specific ink consumption table" in FIG. 9A, the printer 20 is capable of ejecting 5-pl (picoliter) ink droplets, 10-pl ink droplets, or 20-pl ink droplets for each ejecting operation to thereby form an s-size(small-size) dot, an m-size(medium-size) dot, and an 1-size(large-size) dot, respectively. Therefore, the amount of ink consumed is calculated by multiplying the ink unit ejection amounts (dot sizes) by the respective corresponding numbers of times of ejection, and then adding up the results (unit ejection amount-specific amounts of ink consumed) obtained by the respective multiplications. Further, the calculation of the amount of ink consumed is executed separately for each of the six colors of ink.

It should be noted that the number of types of ink unit ejection amounts (dot sizes) is not limited to the above three, but more than three types of unit ejection amounts may be set. Similarly, the number of kinds of ink colors is not limited to the above six, but only M, C, Y and K may be used, or more than six colors may be used.

As described above, the amount of ink actually consumed by the ink jet printer 20 is calculated by the PC1 and as soon as it is determined based on the result of calculation that the remaining amount of ink within the ink cartridge is scarce (shortage of ink), replacement of ink cartridges is carried out. The determination of shortage of ink may be carried out by the management company 3 (PC2). In this case, it is preferable that information of the amount of ejected ink (amount of consumed ink) is sent to the management company 3 via the network NW, thereby allowing common contents (screen view) of the amount of ejected ink to be checked by the PC1 and PC2. According to this configuration, based on the amount of ejected ink sent from the printing company 2, the management company 3 carries out determination of shortage of ink (the method of calculating the amount of consumed ink for the determination is the same as carried out by the PC1), and instruction of replacement of ink cartridges can be effected via the display D1. Further, when the printing company 2 carries out replacement of ink cartridges, if information of execution of the replacement is allowed to be checked on the display D2 of the management company 3, the management company 3 can check (grasp) the stock of ink cartridges held by the printing company 2 in real time.

Next, the method of calculating the predicted amount of ink to be consumed (used for the purpose of producing printed matter) will be described. Although the judgment of shortage of ink (judgment of time for replacement of ink cartridges) is carried out based on the amount of actually consumed ink (amount of ejected ink) as described above, the supply of ink, execution of maintenance service, and the calculation and charging of printing cost, other than above judgment operations, are controlled based on the predicted amount of ink to be consumed. In the following, description will be given of the method of calculating the predicted amount of ink to be consumed by the ink jet printer 20.

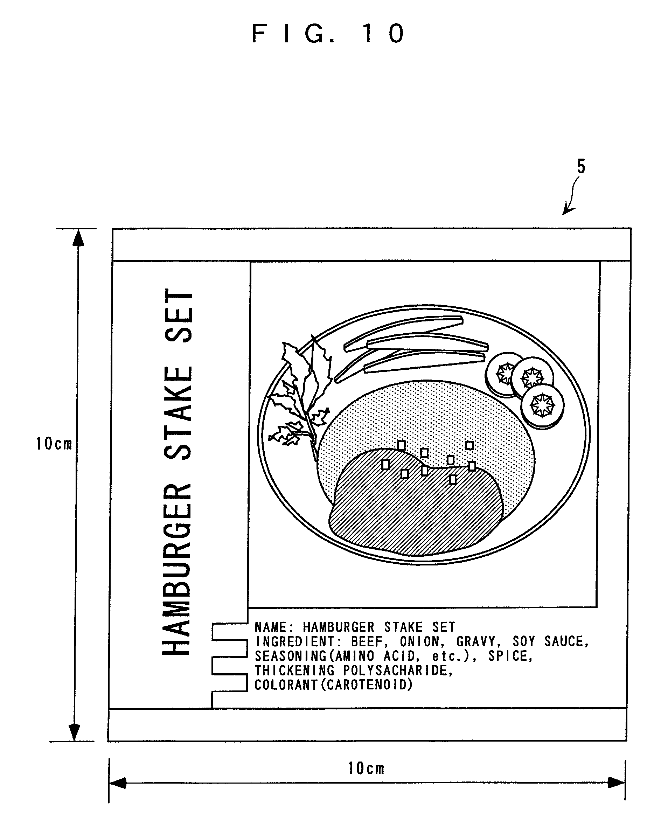

First, digital image data representing the digital image 6 is inputted to the PC1, and the color conversion is carried out by using a predetermined LUT (look up table). More specifically, on the displays D1, D2, the digital image 6 expressed by an additive color process using R (red), G (green), and B (blue) is converted to an image expressed by a subtractive color process using M, C, Y, K, (and the like), which can be outputted by the printing apparatus 20 (ink jet printer), based on the predetermined correlation between the "additive color mixture" and the "subtractive color mixture". The printing apparatus 20 is provided with six colors of ink, i.e. M, C, Y, LM, LC and K (see FIG. 10), and hence in the present example, the digital image 6 is color converted to an image having the six colors. In the color conversion, it is preferred that RGB values of the additive color mixture are changed, as required, according to the color output algorithm. This method makes it possible to take full advantage of characteristics of the printing apparatus 20 in printing operation to thereby produce beautiful printed matter.

Then, the digital image (subtractive color mixture digital image) 6 subjected to the color conversion is converted to print data in a selected one of various methods. These methods include a method of rasterizing the digital image, a method of converting the same to microwaves, and a method of converting the same to ESC/P commands. In the present embodiment, it is assumed that the rasterizing method is employed.

In general, in a normal paper printer of laser-scanning type or in a raster output device called an image setter, image data generated by a DTP system is developed into a bit map by a RIP (Raster Image Processor) and then output. In the present embodiment, the RIP is used to convert the digital image 6 to raster data.

It should be noted that before processing by the RIP, raster data (separation data) represented in a subtractive color mixture may be generated by an application or a PostScript printer driver. Further, although the GDI (Graphical Device Interface) mode of the Windows (registered trademark of Microsoft) and PDF (Portable Document Format) data are based on RGB data, the GDI data and the PDF data may be directly processed by a RIP compatible with the PostScript (registered trademark of Adobe Systems, Inc.) 3.

The data converted to print data (raster data) by processing using the RIP as described above is converted into numerical values corresponding respectively to the six colors, and at the same time dot sizes of the data are defined. Needless to say, when the resolution of the data is changed, the dot sizes are defined differently (for example, when an image has a resolution of 1220 (dpi), the proportion of dots having small sizes is higher than when the image has a resolution of 720 (dpi). Based on the data converted to the print data, the numbers of times of ink ejection are calculated on a color-by-color basis and on a dot size-by-dot size basis. Further, color-specific predicted amounts of inks to be consumed are calculated based on corresponding ones of the determined predicted numbers of times of ink ejection.

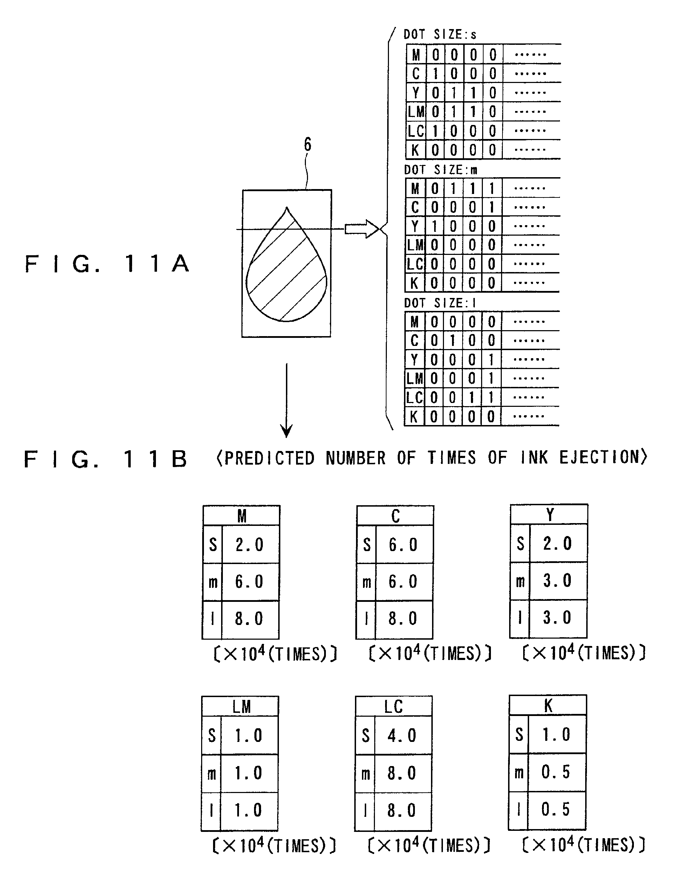

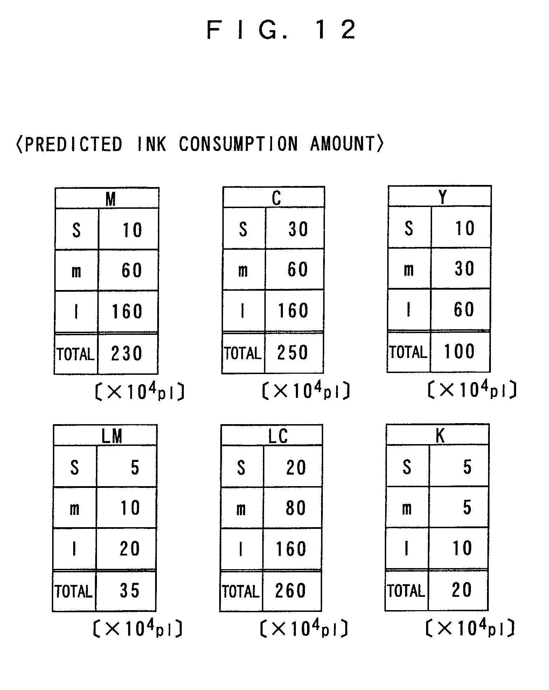

In the following, the process of calculating the printing cost from the data converted to the print data is described with reference to FIGS. 11A, 11B and 12. As shown in FIG. 11A, from the digital data 6 converted to print data, raster data is generated according to various printing conditions (e.g. a resolution which is assumed here to be 720 (dpi)). The raster data is converted into numerical values on a color-by-color basis and on a dot size-by-dot size basis, part of which is illustrated in FIG. 11A such that it can be understood easily. Although in the present embodiment, the dot sizes are classified into three types, i.e. the "s (small)" type, the "m (medium)" type, and the "l (large)" type, it goes without saying that the dot sizes can be classified into a larger number of types.

Subsequently, as shown in FIG. 11B, the numbers of times of ink ejection are calculated based on the above data on a color-by-color basis and on a dot size-by-dot size basis. In the present embodiment, since the specified resolution is 720 (dpi), the maximum number of times of ejection of each color ink is 720 x 720 = 518400 (times). Therefore, the total of the numbers of times of ink ejection for the dot sizes s, m and l of each color ink is set such that it does not exceed 518,400 (times). For example, in the illustrated case of the M color, the number of times of ink ejection for the dot size s is 20,000 (2.0 x 10⁴) (times), that for the dot size m is 60,000 (6.0 x 10⁴) (times), and that for the dot size l is 80,000 (8.0 x 10⁴) (times), and hence the total number of times of ink ejection for the M color ink is 160,000 (16.0 x 10⁴) (times).

Then, color-specific amounts of inks to be consumed are calculated as illustrated in FIG. 12. Each amount of an ink to be consumed is calculated according to a FIG. 9A "unit injection amount (dot size)-specific ink consumption table)" which associates dot sizes and respective amounts of inks to be consumed for the respective dots. As shown in FIG. 12, each of the above calculated numbers of times of ink ejection for the respective dot sizes of each color is multiplied by an amount of the ink to be consumed corresponding thereto, and then the three values obtained for each color are added up to determine the amount of each color ink to be consumed. For example, in the illustrated case of the M color, the amount of the M color ink to be consumed for the dot size s is (2.0 x 10⁴) x 5 = 10 x 10⁴ (pl), that for the dot size m is (6.0 x 10⁴) x 10 = 60 x 10⁴ (pl), and that for the dot size l (8.0 x 10⁴) x 20 = 160 x 10⁴ (pl), and hence the total predicted amount of the M color ink to be consumed is 230 x 10⁴ (pl).

As to each of the other five colors of ink, the predicted amount of ink to be consumed is calculated, and all the calculated predicted amounts are added up to calculate the predicted amount of ink to be consumed per one image. Therefore, by multiplying the predicted amount of ink to be consumed per one image, by the number of labels to be formed, it is possible to calculate the predicted amount of ink to be consumed for the predetermined number of labels. The method of calculating the predicted amount of ink to be consumed is not limited to the above, but after subjecting the data of the digital image 6 to a dithering process or the like, and calculating the predicted amount of ink to be consumed for each color and graduation value, all the calculated predicted amounts may be added up to calculate the total predicted amount of ink to be consumed.

In the present embodiment, the predicted amount of ink to be consumed is calculated not by calculating the predicted amount calculated based on the digital image 6 (amount of ink to be consumed for the purpose of production of printed matter (amount of printing ink consumption)) alone but by adding the amount of ink to be consumed for other purposes than the purpose of production of printed matter thereto, and the ink supply and the charging for the printing cost are carried out based the sum total.

Now, description will be given of "the amount of ink to be consumed for other purposes than printing (amount of non-printing ink consumption)". As shown in a table (b) in FIG. 4, the amount of non-printing ink consumption includes "the amount of ink to be consumed during execution of maintenance service (shown under "maintenance")", "the amount of ink sucked for automatic cleaning (shown under "automatic cleaning")" and "the amount of ink ejected for periodical flushing (shown under "periodical flushing")". Therefore, by adding up the amounts of the ink used for the respective operations, it is possible to calculate "the amount of ink to be consumed for other purposes than the purpose of production of printed matter (total amount of non-printing ink consumption)".

In the case of "maintenance", the calculation of the amount of non-printing ink consumption is calculated based on the total of predicted amounts of ink to be ejected for purposes of production of printed matter calculated on a color-by-color and dot size-by-dot size basis. More specifically, the amount of ink to be consumed for "maintenance" is calculated assuming that the maintenance service is carried out when any of the total numbers of ejections carried out for combinations of specific colors and specific sizes has reached 1.0 x 10¹² (times) from the immediately preceding execution of maintenance service, and that an amount of 5 x 10⁸ pl is additionally consumed for one maintenance service. Therefore, the table (b) in FIG. 4 shows that the maintenance service is to be carried out on May 1 (Mon) (see the column of "maintenance"). Of course, no maintenance service is carried out on days none of the cumulative total numbers of ejections for combinations of specific colors and specific sizes are expected to reach 1.0 x 10¹² (times), so that the amount of ink to be consumed for maintenance service for those days is set to 0 (zero).

Further, in the case of "automatic cleaning", the amount of ink to be consumed therefor is calculated assuming that the automatic cleaning is executed when any of the cumulative total predicted amounts of ink to be consumed for the colors for the purpose of production of printed matter (amount of printing ink consumption) reach 1.0 x 10¹² pl = 1 liter, from the immediately preceding execution of the automatic cleaning, as well as at the start of the printer, and that an amount of 5 x 10⁸ pl is additionally consumed for each color per automatic cleaning. Therefore, the table (b) in FIG. 4 shows that the automatic cleaning is to be carried out on May 1 once for all the colors (see the column of "automatic cleaning"). It should be noted that if the replacement of ink cartridges can be detected by the PC2, it is preferable that the amount of ink to be consumed for the automatic cleaning is calculated assuming that the automatic cleaning is executed whenever the cumulative total of predicted amounts of color to be consumed reaches 1.0 liter (i.e. assuming that the automatic cleaning is executed in a manner timed to replacement of ink cartridges).

Further, in the case of "periodical flushing", the amount of ink to be consumed therefor is calculated assuming that 2% of each of the predicted amounts of ink to be consumed for respective colors for the purpose of production of printed matter (amount of printing ink consumption) is additionally consumed. Therefore, the table (b) in FIG. 4 shows that on May 1, the ink of M is to be consumed in an amount of 230.0 x 10⁸ pl x 0.02 = 4.6 x 10⁸ pl for the periodical flushing (see the column of "periodical flushing").

The amount of non-printing ink consumption may be calculated not individually for "maintenance", "automatic cleaning" and "periodical flushing", but collectively, a total thereof may be calculated as several % of the whole amount of printing ink consumption (e.g. when it is calculated as 5% of the whole amount of printing ink consumption, assuming that the amount of printing ink for M is 230.0 x 10⁸ pl, the non-printing ink consumption amounts to 230.0 x 10⁸ pl x 0.05 = 11.5 x 10⁸ pl). Further, the amount of non-printing ink consumption may be calculated assuming that a predetermined amount of ink is additionally consumed whenever the predicted number of times of ejection reaches a predetermined number (e.g. if 0.5 x 10⁸ pl of ink is additionally consumed as the amount of non-printing ink consumption when the predicted number of times of ejection reaches 1.0 x 10⁸ times, since in a table (a) in FIG. 4 the predicted number (total of predicted numbers for s, m, and l) of times of ejection of M is equal to 16.0 x 10⁸ times, the amount of non-printing consumed is 0.5 x 10⁸ pl x (16.0/1.0) = 8.0 x 10⁸ pl.

As described above, the predicted amount of ink to be consumed (total amount of ink consumption) based on which ink supply and charging of printing cost are carried out is calculated by adding "the amount of ink to be consumed for purposes other than the purpose of production of printed matter (total amount of non-printing ink consumption)" to "the amount of ink to be consumed for the purpose of production of printed matter (total amount of printing ink consumption)" . Therefore, by multiplying the total amounts of ink to be consumed with respective color-specific unit prices (see FIG. 9B), an ink cost (printing cost) can be calculated.

Next, a method of calculating the ink cost (printing cost) will be described. The ink cost can be calculated, as described above, by multiplying "the total amounts of ink to be consumed (a. predicted ink consumption information)" with respective color-specific unit prices in a "color-specific ink unit price table" shown FIG. 9B. As shown in the figure, the ink unit prices are set on a daily basis, because different kinds of inks can be used on each day. Each ink unit price is variable or can be changed in a floating manner due to other various conditions (including a discount on ink cost due to overstock in the management company 3, and a discount profitable both for the management company 3 and a particular printing company 2, such as a discount given to the particular printing company 2 to which an increased number of ink cartridges have been supplied). Thus, the ink unit prices are changeable whenever the situation changes. Further, it is possible to change ink unit prices according to hours set within a day.

It should be noted that the information of estimate of printing cost (see FIG. 4) calculated based on "a. predicted ink consumption information" is displayed on the display D2 of the PC2, and also transmitted to the printing company 2 via the network NW to allow the same to be displayed on the display D1 of the PC1. In short, the same contents (screen view) of the information of the amount of ink to be consumed can be checked on both the PC 1 and the PC 2.

Although in the above embodiment, a printing cost for each color is calculated by multiplying the corresponding ink unit price by the corresponding ink consumption amount (total amount of ink consumption), by using the "color-specific ink unit price table" (see FIG. 9B) which associates ink colors with respective ink unit prices, the color-specific printing costs may be calculated by using (consulting) an "ink price table (coloring material price table)" associating amounts of ink consumed with respective color-specific ink prices corresponding to the amounts. According to this method, simply by consulting the table, it is possible to calculate the color-specific printing costs without using any calculation programs.

Next, a method of managing ink supply will be described. The management company 3 having received "a. predicted ink consumption information" from the printing company 2 carries out instructing and managing operations for ink supply based on "the total amount of ink consumption" calculated by adding the amount of non-printing ink consumption to the amount of printing ink consumption. The management company 3 is capable of predicting the number of cartridges to be used up by calculating the predicted amount ink to be consumed (total amount of ink consumption), as described hereinbefore. Therefore, when it is predicted that two cartridges of M will be consumed on May 1, the instruction of supply of two M cartridges by the day (April 30) before May 1 is carried out, and at the same time the information of the supply schedule is transmitted to the printing company 2. The information of the supply schedule is, as illustrated by "ink supply schedule list") in FIG. 7, displayed in the form of the number of cartridges to be supplied on a color-by-color basis, and date scheduled for the supply (see the column of "number of cartridges to be supplied/scheduled date").

The illustrated example shows that the supply of the number of ink cartridges (one for each of M, C, LC) to be consumed on May 1 (Mon) was scheduled to be carried out on April 30 (Sun), and the supply of the cartridges of these colors was instructed on April 25. Then, after confirming the instruction of the supply dated April 25, the printing company 2 accepted the schedule (see the column of "confirmation of supply schedule"), and after the cartridge were actually supplied, the printing company 2 confirmed the supply on 13:30 on April 30 (Sun) (see the column of "confirmation of supply"). It should be noted that the management company 3 may transmit the information of a schedule of supply of ink cartridges and instruct supply of ink cartridges (order process) without checking the acceptance of the instruction of supply of ink cartridges. In this case, however, it is preferred that a contract (allowing the management company 3 to supply ink cartridges without prior permission of the printing company 2) should be made in advance between the printing company 2 and the management company 3.

Next, a method of managing maintenance service will be described. The management company 3 carries out instructing and managing operations for maintenance service based on "a. predicted ink consumption information" sent from the printing company 2. As described hereinbefore, "a. predicted ink consumption information" includes information of the number of times of ejection of each color ink (see FIG. 3). The management company 3 issues an instruction for execution of maintenance service when any of the total numbers of times of ejection of color inks has reached a predetermined number (e.g. 1 x 10¹⁰ (times) from the immediately preceding execution of maintenance.

A date for execution of the maintenance service is set to a day immediately before a day on which the total number of times of ejection of an ink of the in jet printer 20 is predicted to reach a predetermined number, and the schedule is displayed as shown in a "maintenance schedule list" in FIG. 8, so that the management company 3 (PC 2) can check the schedule on the display D2. Further, the management company 3 transmits information of the schedule for execution of the maintenance service ("c. maintenance schedule information") to the printing company 2. Therefore, the printing company 2 (PC 1) can also check the schedule on the display D1 (see a "maintenance" column of the "ink consumption list <monthly total>" in FIG. 5.

Next, the lists displayed on the displays D1, D2 of the PC1 and PC2 will be described. Here, the transmission and reception of information will be described which are carried out between the printing company 2 and the management company 3 when the printing company 2 sends a request of estimate of printing a label 5 as shown in FIG. 10 to the management company 3. As described above, the printing company 2 (PC1) can display "printing cost estimate request list" shown in FIG. 3, "calculated printing cost estimate list" shown in FIG. 4, "ink consumption list" shown in FIGS. 5 and 6, and "ink supply schedule list" shown in FIG. 7, and the management company (PC2) can display not only these lists but also "maintenance schedule list" shown in FIG. 8.

It should be noted the management company 3 (PC 2) actually prepares the lists other than the "maintenance schedule list" for each company. However, illustrated here are the only lists prepared for "printing company A". Therefore, on the part of the management company 3 (PC 2), it is preferred that the name or the like, such as the "printing company A", which indicates that the lists belong to the "printing company A" is displayed somewhere (e.g. as a title) in each of the lists. It is assumed here that the illustrated display screen views displayed on the part of the printing company 2 (PC 1) are those displayed by the "printing company A". Further, the illustrated screen views do not show the contents of the screen displayed on the same date and same time, and therefore, the description will also refer to the lapse of time.

Referring first to FIG. 3, there is shown "the printing cost estimate request list" prepared (information thereof is inputted) by the printing company 2, containing "printing information", "printing conditions", and "digital image", as well as "predicted ink consumption amount" calculated by the PC1 based on these. As shown in the figure, the request of the estimate has been made at 12:00 on April 24 (Mon), and the printing is scheduled to be actually carried out on May 1 (Mon). As can be understood from this, there is a time lag between the date of the request of the estimate and the date of the printing (scheduled). This is for allowing the management company 3 to supply ink before the date scheduled for printing, based on the contents of the request of the estimate. Therefore, it is preferable that between the two companies, there should be made an agreement that the printing company should request an estimate of printing at least six days before a date scheduled for printing.

The upper box in FIG. 4 shows "printing information", "printing conditions", and "digital image". As the "printing information", in addition to the date of printing as a scheduled date of execution of the printing, information for identifying the image, such as an image No., is shown. Further, as the "printing conditions", resolution, label size, and number of copies are shown. Further, in the right-side portion of the upper box, the "digital image" to be printed which has been inputted to the PC1 is displayed (see FIG. 10).

On the other hand, the "predicted ink consumption amount" in the table as a lower part of FIG. 4 shows "total amount of printing ink consumption") calculated for respective colors, by calculating the numbers of times of ejection of respective colors of ink for respective specific unit ejection amounts (dot sizes of s, m, l), and multiplying the numbers with the unit ejection amounts. The "total amount of printing ink consumption") represent the predicted amount of ink to be consumed for the purpose of production of printed matter.

The unit ejection amounts for respective dot sizes (dot size-specific unit ejection amounts) are determined by looking up a "unit ejection amount (dot size)-specific ink consumption amount table" formed by associating unit ink ejection amounts (stored in the PC1) shown in FIG. 9A with amounts of ink to be consumed. Here, the values of the predicted numbers of times of ejection of ink in the columns "s", "m", and "l", and the values of the amounts of ink to be consumed in the column of "total of printing ink consumption" shown in the table as the lower part of FIG. 3 are information calculated by the PC1. It should be noted that the information displayed as "printing cost estimate request list" may be formed by the table as the lower part of FIG. 3 alone. This form of the list can reduce the amount of information to be transmitted.

Next, the "calculated printing cost estimate list" will be described with reference to FIG. 4. This list is formed based on the "printing cost estimate request list" shown in FIG. 3 by the management company 3. The contents of the box shown at the top and the table (a) are identical to the contents shown in the "printing cost estimate request list". As shown therein, the "calculated printing cost estimate list" is prepared (calculated) at 10:00 on April 25 (Tue) (in response to the printing cost estimate request made on 12:00 on April 24 (Mon). Further, the time limit for a formal order or cancellation of the present process is set to April 26 (Wed). This is for allowing the management company 3 to supply ink before the date of printing. The time limit for a formal order or cancellation of the present process by the printing company is preferably set to e.g. five days before the date of scheduled printing.

The table (b) in the lower part of FIG. 4 shows results obtained by calculating "the respective amounts of inks used for other purposes than the purpose of printing (total amounts of non-printing ink consumption)". More specifically, in the figure, the predicted amounts of each color ink to be consumed respectively for "maintenance", "automatic cleaning" and "periodical flushing" are shown, and the total of the amounts is shown as a "total amount of non-printing ink consumption". Further, values shown in a "maintenance" column, an "automatic cleaning" column, a "periodical flushing" column, a "total amount of non-printing ink consumption" column, and a "total amount of ink consumption" column are information calculated (counted) by the PC 2, based on the values shown in the table (a).

A table (c) in FIG. 4 shows each "printing cost" obtained by multiplying a "total amount of ink consumption" for each color by the corresponding "ink unit price". The "ink unit price" is a value obtained by consulting the "color-specific ink unit price table" shown in FIG. 9B which associates the ink colors with respective ink unit prices. Further, the six printing costs calculated on a color-by-color basis by consulting the table are added up to obtain a total printing cost (5,877.0 yen)). The total printing cost indicates printing cost required for production of the 1,000 labels to be printed on May 1 (Mon). In the table (c) in FIG. 4, values displayed in a "ink unit price" column are information obtained from the "color-specific ink unit price table" stored in the PC 2, while values in a "printing cost" column are information calculated by the PC 2, based on the information from the table. Now, the following description will be given assuming that the labels 5 to be printed on May 1 (Mon) are limited to those for which the printing cost has been calculated.

Next, the "ink consumption list" shown in FIGS. 6 and 7 will be described. The "ink consumption lists" are classified into the "monthly total" in FIG. 5 and the "annual total" in FIG. 6, and prepared based on results of calculation of cumulative totals of "calculated printing cost estimate list" in FIG. 4. The illustrated examples show screen views displayed at 11:00 on April 25 (Tue) immediately after receiving the order from the printing company 2.

The "ink consumption list <monthly total>" in FIG. 5 shows "total amount of ink consumption" as a total of the amount of printing ink consumption and the amount of non-printing ink consumption and the "total printing cost" shown at the bottom row of the table (c) as the lower part of the "calculated printing cost estimate list" in FIG. 4. Further, a "maintenance" column shows executed dates of maintenance service and scheduled date of execution of the service. The executed date of the maintenance service indicates the date and time at which a service man sent from the management company 3 to the printing company 2 has reported the completion of maintenance (e.g. by depressing a maintenance completion button). This information is also sent to the management company 3 (PC2), and reflected on the "maintenance schedule list" (see a "maintenance completed at:" column) in FIG. 8. Further, the scheduled date of execution of maintenance service is displayed based on the information sent from the management company 3. Further, "total" at the bottom row of the present list (FIG. 5), there are shown monthly totals (calculated based on orders made as of 11:00 April 25 (Tue) for each monthly total. It should be noted that values displayed here are all information calculated by the PC2.

FIG. 6 shows the "ink consumption list <annual total>" in which the total of monthly ink consumption amounts for a year is calculated based on data of the "monthly total" in FIG. 5. Each amount of ink consumption displayed here is identical to the corresponding value shown in the bottom row "total" of each monthly total in the FIG. 5 list. The management company 3 charges the cost of ink to the printing company 2, based on an amount of money shown in a "total printing cost" column. For example, the printing company 2 is charged 109,871 (yen) as an ink cost for April (decimal fraction being omitted; the decimal fraction may also be omitted on the displays D1 and D2). Further, in the bottom row "total" of the "ink consumption list <annual total>", annual totals of respective columns are displayed. Each value displayed in the list is information calculated by the PC 2.

Next, the "ink supply schedule list" shown in FIG. 7 will be described. The box at an upper part of FIG. 7 shows "controlled stock" (the number of ink cartridges to be stored as a stock), "printer model number", and "cartridge type".

In a table shown in a lower part of FIG. 7, a row corresponding to today (April 30 (Sun) is displayed in a shaded manner, and at the same time, each number of cartridges to be supplied, and a date on which this supply was instructed are shown on a color-by-color basis ("number of cartridges to be supplied & date scheduled"). If the printing company 2 requests the supply of ink, the requested date (date of confirmation of scheduled date) is displayed (see "confirmation of supply schedule" column). Further, when the ink (ink cartridges) is actually supplied, the time at which the supply is confirmed is displayed (see a "confirmation of supply" column). The "confirmation of supply" column displays information at a time point the printing company has confirmed the supply (e.g. by depressing a supply confirmation button) and thereby sent the information to the management company 3. Therefore, in the illustrated example, the confirmation of supply schedule of three ink cartridges for which the instruction of supply was made on April 25 was carried out on April 26, and further, the confirmation of actual supply of ink was carried out at 13:30 on April 30 (Sun).

Next, the "maintenance schedule lists" shown in FIG. 8 will be described. The "maintenance schedule lists" can be checked by the management company 3 (PC 2) alone and a list for today (April 30 (Sun) in the illustrated example) is displayed therein in a shaded manner. Each list shows schedules for maintenance service to be executed on the corresponding day. The "maintenance schedule list" shown in FIG. 7 shows a schedule as of April 30 (Sun) 1, and hence tables for May 1 et seq. show only a to-do list. For example, a person who was in charge of the "printing company A" on April 30 (Sun) was "Yamada" as shown in a "person in charge" column, and an instruction for providing maintenance service to the "printing company A" was issued at 11:00 on April 25 as shown in a "maintenance instructed at:" column. A maintenance instruction is issued when a color-specific number of times of ink ejection for has reached a predetermined number (e.g. 1 x 10¹² (times)), and the information ("c. maintenance schedule information") is sent to the printing company 2 so as to be reflected in the FIG. 5 "ink consumption list <monthly total>" (see the "maintenance" column).

Further, the "maintenance scheduled for:" column displays a time scheduled for execution of maintenance service, which is finally determined after negotiating schedule between persons in charge on both sides, at a time of the final determination. In the "maintenance completed at" column, a time of day at which maintenance service has been completely executed is displayed when the information ("c. maintenance completion confirmation information") has been transmitted from the printing company 2. Further, in a "remarks" column, specific pieces of information of maintenance service (e.g. cleaning and head replacement for the printing company A on April 30 (Sun)) are displayed. The information displayed in the "remarks" column is based on information which was sent from the ink jet printer 20 to the PC 2 via the PC 1 as a result of self-inspection performed by the ink jet printer 20 for inspecting portions where maintenance service is effected. Alternatively, contents of a report which a serviceman in charge of the maintenance service made e.g. by telephone may be displayed in the "remarks" column.

As described above, the printed matter-issuing system 1 enables the printing company 2 and the management company 3 to exchange various kinds of information via the network NW and confirm the information on the respective displays D1 and D2. Therefore, even when the printing company 2 and the management company 3 are remote from each other, it is possible for the management company 3 to promptly grasp the predicted amount of ink to be consumed by the printing company 2 and promptly and efficiently carry out various management operations such as the supply of ink, maintenance service, calculation of ink costs (printing costs), and so forth.

Further, the management company 3 carries out proper (accurate) ink supply suitable for the printing apparatus 20, which prevents the printing company 2 from supplying improper ink to the printing apparatus 20 by mistake. More specifically, it is possible to prevent degradation of printing quality or breakdown of the apparatus e.g. due to clogging of the ink jet head (nozzles) or a malfunction in the ink circulation system, which is likely to be caused by the use of improper ink.

Further, according to the invention, the printing company 2 calculates the amount of ink consumed based on data of the digital image 6, which makes it possible to calculate an accurate amount of ink consumption. Further, the printing company 2 sends information of the amount of ink consumption to the management company 3 via the network, which enables the management company 3 to efficiently supply (instruct supply) of ink from a location remote from the printing company 2 (place where the printing apparatus 20 is installed). On the other hand, the management company 3 sends information of instruction of supply of ink to the printing company via the network NW, which makes it possible for the printing company 2 to carry out efficiently and promptly the control (stock control) concerning the consumption and supply of ink.

Moreover, the management company 3 is capable of instructing the execution of maintenance service for the printing apparatus 20 (owned by the printing company 2) when it detects the cumulative predicted amount of ink to be consumed has reached a predetermined value. In other words, by providing maintenance service in a manner dependent on the predicted amount of ink to be consumed, the inspection of the apparatus 20 can be carried out at an appropriate time, and the parallel execution of the supply of ink and maintenance service contributes to enhanced operation efficiency.

Also according to the invention, the printing company 2 calculates the amount of ink to be consumed based on the digital image 6, and further printing cost is calculated based on this amount of ink to be consumed, which enables the printing cost to be calculated accurately.

Further, the printing cost (ink cost) is calculated based on the total amount of ink consumption obtained by adding up the amount of ink to be consumed for the purpose of production of printed matter (amount of printing ink consumption) and the amount of ink to be consumed for other purposes (e.g. "maintenance", "automatic cleaning", "periodical flushing") than the purpose of production of printed matter (amount of non-printing ink consumption). Therefore, it is possible to calculate more accurate printing cost corresponding to the amount of coloring material to be actually consumed by the printing cost.

Although in the above example, the calculation of the amount of ink to be consumed for other purposes than the purpose of production of printed matter (amount of non-printing ink consumption) and that of printing cost thereof are carried out by the management company 3 (PC2), this is not limitative, but they may be carried out by the printing company 2 (PC1). That is, the system may be configured such that the printing company (PC1) can calculate the "total of amounts of printing ink consumption" in the table (a) in FIG. 4, and the "total of amounts of non-printing ink consumption" in the table (b) in FIG. 4, and "printing cost (total printing cost)" the table (c) in FIG. 4. Further, in this case, the system may be configured such that only information of the results of the calculations (total printing cost) is sent to the printing company 3. According to this configuration, it is possible to reduce the amount of information to be transmitted, thereby enabling the transmission and reception of information between the printing company 2 and the management company 3 to be carried out smoothly.

It should be noted that in the above case (where the total printing cost is calculated by the printing company 2), the printing company 2 is required to grasp information of ink unit prices. Therefore, it is preferred that the ink jet printer 20 is capable of detecting the kind of an ink cartridge (i.e. the kind of an ink) when the cartridge is mounted therein, and that the ink unit prices are set to uniform values on an ink kind-by-ink kind basis. According to this method, the printing company 2 can check on the ink unit prices. In this connection, the kind of an ink is not always required to be detected by the ink jet printer 20, but it may be confirmed by the user's visual recognition of the name of the ink kind written on a cartridge or the like.

Further, in the above case (where the printing company 2 sends only information of the total printing cost to the management company 3), since the management company 3 cannot manage the timing for executing maintenance service, it is preferred that the printing company 2 makes a request for execution of maintenance service, or alternatively maintenance service is executed periodically regardless of the amount of ink consumed (ejected). In addition, it is difficult to the management company 3 to accurately management ink supply (the management company 3 cannot accurately calculate the amount of ink to be consumed only from the information of the total printing cost), and hence it is preferable that the printing company 2 makes a request for ink supply in proper timing.

Further, inversely to the above, all the operations from the calculation of the amount of ink to be consumed for the purpose of production of printed matter (amount of printing ink consumption) to the calculation of printing cost may be carried out by the management company (PC3). In other words, in this case, the printing company 2 is only required to sent the information shown in the box at the upper part of FIG. 4 (printing information, printing conditions, and digital image) to the management company 3, which makes it possible to reduce the amount of information to be transmitted, thereby enabling the transmission and reception of information between the printing company 2 and the management company 3 to be carried out smoothly.

Although in the above embodiment, when a total number of times of dot size-specific and color-specific ink ejection has reached a predetermined number of times (e.g. 1 x 10¹² (times)), an instruction for execution of maintenance service is issued by the management company 3, this is not limitative, but maintenance service may be executed when it is detected by counting the number of times of ink ejection from each nozzle that the number of times of ink ejection from any one of the nozzles has reached a predetermined number. Alternatively, maintenance service may be executed when the total number of times of ink ejection from all the nozzles for all the colors has reached a predetermined number.

Further, although in the above embodiment, a printing cost is calculated based on the predicted amount of ink to be consumed including the respective amounts of ink consumed for "maintenance", "automatic cleaning" and "periodical flushing", this is not limitative, but any or all the amounts of ink consumed for the non-printing purposes may be excluded in the amount for calculation of the printing cost under an agreement between the management company 3 and the printing company 2. That is, it is possible to charge the cost of only ink consumed or to be consumed for production of printed matter by the printing apparatus 20 to the printing company 2.

The management company 3 may take charge of the amount of ink sucked for "automatic cleaning", based on the predicted amount of ink to be consumed, and issue an instruction for execution of maintenance service for removing waste ink from the waste ink storage tank (storing sucked waste ink) when it is detected that the amount of waste ink stored in the tank has exceeded a predetermined amount. In this case, it is preferred that information of a schedule for execution of the maintenance service (preferably including the details of the service) is sent to the printing company 2. Similarly, the management company 3 may take charge of the amount of ink ejected for "periodical flushing", based on the predicted amount of ink to be consumed, and issue an instruction for execution of maintenance service for replacing the waste ink absorber (absorbing ejected waste ink) with a new one when it is predicted that the waste ink absorber has become saturated. In this case as well, it is preferred that information of a schedule for execution of the maintenance service is sent to the printing company 2. According to these methods, since the amount of waste ink stored in the waste ink storage tank and the amount of ink absorbed in the waste ink absorber are taken charge of by the management company 3, the printing company 2 can save time and labor required for maintenance management for the printing apparatus 20.

Further, although in the above embodiment, ink is supplied by the management company 3, this is not limitative but the management company 3 may instruct another company (separate from the management company 3) specializing in ink supply to deliver the ink. In this case, it is preferred that the ink delivery (supply) company is allowed to consult the "ink supply schedule list" shown in FIG. 7. Similarly, the management company 3 may instruct another company (separate from the management company 3) specializing in maintenance service to execute maintenance service. In this case, it is preferred that the maintenance service company is allowed to consult the "maintenance schedule list" shown in FIG. 8. According to these methods, since the companies are in charge of the respective services, it is possible to provide substantial or complete services for the printing company 2.

Further, algorithms of the method of calculating the predicted amount of ink to be consumed may be stored in a storage medium (CD-ROM, MO, or the like) or printer driver software, and may be utilized by being read out therefrom. Alternatively, the algorithms may be stored in a storage medium (ROM or the like), which may be incorporated in the printing apparatus 20. More specifically, by integrating various functions (a communication function, a display function, etc.) into the printing apparatus 20, the printing company 2 can utilize the system 1 through the printing apparatus 20 alone (without any need to use a terminal unit, such as a personal computer or the like).

Further, information may be exchanged exclusively at a time when the management company 3 or the printing company 2 carries out an operation for transmission and reception of information (i.e. at a time when one of the two companies 2 and 3 desires to transmit or receive information), or alternatively at any time. In the former case, a charge for connection to the network NW can be reduced (when connection to the network NW is charged for), and high security can be ensured, while in the latter case, both the management company 3 and the printing company 2 can always obtain the most up-to-date information, which makes it possible to speed up operations (processing).

Although in the above embodiment, ink is supplied in units of cartridges (in units of liters), it may be supplied according to the amount of ink consumed or to be consumed. In this case, for example, when the amount of ink to be consumed by the printing company 2 for a specific day is 0.2 liters, 0.2 liters of ink are supplied by the management company 3 on the day before the specific day (in this case, not an ink cartridge containing ink but ink itself is supplied). According to this method, it is possible to supply an amount of ink which suits the scale (ink consumption) of a printing company. Further, since ink is supplied according to the amount of ink to be consumed, degradation of ink can be prevented.

Further, when the printing apparatus 20 is formed by an ink jet printer as in the above embodiment, it is preferable that the printing apparatus 20 is implemented by an ink jet printer of a (piezoelectric) type which ejects ink by deformation of piezoelectric elements. The piezoelectric ink jet printer utilizes the characteristic of a piezoelectric element which is deformed by application of a voltage, so that it is possible to eject ink droplets straightforward with accuracy as well as to reduce a unit ejection amount for each ejecting operation. In other words, each dot can be reduced in size, which enables printing with high accuracy and high resolution. In addition, since a unit ejection amount for each ejecting operation can be reduced, it is possible to increase the number of times (or frequency) of ink ejection which can be performed within a predetermined time period. Therefore, if the moving speed of the head is increased, it is possible to carry out high-speed printing so long as the resolution is not changed, while if the frequency is increased with the motion of the head maintained at a conventional speed, it is possible to increase the DPI value in the moving direction of the head. Ink for use in the ink jet printer may be dye ink, pigment-based ink, sublimable ink, oil-based ink, UV ink or electrically-conductive water-color ink. Alternatively, the ink may be a special coloring material (ejectable material), such as stealth ink or organic EL, which does not directly form an image.

It is also possible to employ a different type of printer, such as an electrophotographic printer, as the printing apparatus 20. In an electrophotographic printer, toner is used as the coloring material. Now, brief description will be given of a toner consumption amount-calculating method for use in the case of an electrophotographic printer being used as the printing apparatus 20. The electrophotographic printer causes a print controller to convert a sheet of information of characters and/or one or more pictures sent from a personal computer or the like to images each formed as a set of microdots with a plurality of sizes, and then turns on/off minute light sources of an optical writing system (laser diodes, LED array, etc.) in response to presence or absence of an image portion corresponding to each dot to thereby transfer the images onto a transfer sheet. Each dot size can be changed according to the length of a time period spent for optical writing. Further, by forming images with color-specific gradations, based on color-separated image signals, such as those indicative of M, C, Y, and K, respectively, and superimposing them one upon another, it is possible to produce a color print.

Therefore, similarly to the amount of ink consumed by the ink jet printer, the predicted amount of toner to be consumed by the electrophotographic printer is calculated based on results of calculation of a predicted number of dots (corresponding to a predicted number of times of ejection when the ink jet printer 3 is employed) which are counted on a color-by-color basis and on a dot size-by-dot size basis. Similarly, the system configuration employed when an ink jet printer is used as the printing apparatus 20 is applicable to a printing cost-calculating method and management of supply of (toner) cartridges and maintenance service in the case of the electrophotographic printer being used as the printing apparatus 20. It should be noted that toner for use in an electrophotographic printer may be powder toner or liquid toner.

It is further understood by those skilled in the art that the foregoing is a preferred embodiment of the invention, and that various changes and modifications may be made without departing from the spirit and scope thereof.

## Claims

1. A printing cost calculation system for calculating a printing cost required for producing printed matter by a printing apparatus using at least one coloring material, based on a digital image represented by discrete numerical data,
the printing cost calculation system comprising:
digital image input means for inputting the digital image;
first calculation means for calculating an amount of the at least one coloring material to be consumed by the printing apparatus, based on the digital image inputted by said digital image input means;
information receiving means for receiving information of the amount of the at least one coloring material to be consumed calculated by said first calculation means, via a network; and
second calculation means for calculating the printing cost based on the information received by said information receiving means.

2. A printing cost calculation system according to claim 1, further comprising color conversion means for carrying out color conversion of the digital image to a subtractive color mixture digital image which is expressed by a subtractive color process, when the digital image is an image expressed by an additive color process, and
wherein said digital image input means includes means for inputting the subtractive color mixture digital image obtained by the color conversion by said color conversion means.

3. A printing cost calculation system according to claim 1, further comprising pseudo gradation means for carrying out pseudo-gradation processing on the digital image by a dither method, and
wherein said first calculation means includes gradation-specific amount calculation means for calculating gradation-specific amounts of the at least one coloring material to be consumed.

4. A printing cost calculation system according to claim 1, wherein the printing apparatus is capable of carrying out printing in dots having a plurality of dot sizes, and
wherein said first calculation means includes means for calculating amounts of the at least one coloring material to be consumed, on a dot size-by-dot size basis.

5. A printing cost calculation system according to claim 1, further comprising copy number-designating means for designating a number of copies of the printed matter, and
wherein said second calculation means calculates the printing cost according to the number of copies designated by said copy number-designating means.

6. A printing cost calculation system according to claim 5, wherein said second calculation means includes means for calculating a printing cost per copy of the printed matter, and means for calculating a total printing cost of the copies of the printed matter whose number has been designated by said copy number-designating means.

7. A printing cost calculation system according to claim 1, further comprising storage means for storing a coloring material price table associating amounts of the at least one coloring material to be consumed with respective prices thereof, and
wherein said second calculation means includes means for calculating the printing cost by looking up the coloring material price table stored in said storage means.

8. A printing cost calculation system according to claim 1, further comprising storage means for storing a color-specific coloring material prices table associating respective amounts of different colors of coloring materials with respective prices thereof, and
wherein said first calculation means includes means for calculating color-specific amounts of the coloring materials to be consumed, on a color-by-color basis, and
wherein said second calculation means includes means for calculating the printing cost by looking up the color-specific coloring material prices table stored in said storage means.

9. A printing cost calculation system according to claim 7 or 8, wherein the prices are changeable in a floating manner.

10. A printing cost calculation system according to claim 1, wherein said information receiving means is capable of receiving the information at a desired time or at all times.

11. A printing cost calculation system according to claim 1, wherein the network is constructed by an internet or a LAN.

12. A printing cost calculation system according to claim 1, wherein the at least one coloring material includes ink or toner.

13. A printing cost calculation system according to claim 1, wherein the printing apparatus includes an ink jet printer or an electrophotographic printer.

14. A printing cost calculation system according to claim 1, wherein said first calculation means includes means for calculating the amount of the at least one coloring material to be consumed, by adding an amount of the at least one coloring material to be consumed for other purposes than a purpose of production of the printed matter.

15. A printing cost calculation system according to claim 14, wherein the amount of the at least one coloring material to be consumed for other purposes than the purpose of production of the printed matter includes an amount of the at least one coloring material to be consumed for operation of maintenance service for the printing apparatus.

16. A printing cost calculation system according to claim 14, wherein the printing apparatus includes an ink jet printer including an ink jet head having nozzles for ejecting ink therefrom, and
wherein the amount of the at least one coloring material to be consumed for other purposes than the purpose of production of the printed matter includes an amount of ink to be consumed for automatic cleaning executed by sucking the ink from the nozzles of the ink jet head.

17. A printing cost calculation system according to claim 14, wherein the printing apparatus includes an ink jet printer including an ink jet head having nozzle for ejecting ink therefrom, and
wherein the amount of the at least one coloring material to be consumed for other purposes than the purpose of production of the printed matter includes an amount of ink to be consumed for periodical flushing executed by ejecting the ink periodically from the nozzle of the ink jet head.

18. A printing cost calculation system comprising:
a user terminal capable of calculating an amount of at least one coloring material to be consumed by a printing apparatus for producing printed matter, based on a digital image represented by discrete numerical data, and transmitting information of the amount of the at least one coloring material to be consumed; and
a host terminal capable of receiving the information of the amount of the at least one coloring material to be consumed, via a network, and calculating a printing cost for producing the printed matter, based on the received information, said host terminal transmitting information of the printing cost to said user terminal.

19. A printing cost calculation system according to claim 18, wherein said host terminal carries out an order process for placing an order for supply of the at least one coloring material to the printing apparatus, based on the information of the amount of the at least one coloring material to be consumed received via the network.

20. A coloring material supply management system for managing supply of at least one coloring material to a printing apparatus that produces printed matter by using the at least one coloring material, based on a digital image represented by discrete numerical data,
the coloring material supply management system comprising:
digital image input means for inputting the digital image;
calculation means for calculating an amount of the at least one coloring material to be consumed by the printing apparatus for producing the printed matter based on the digital image inputted by said digital image input means;
information receiving means for receiving information of the amount of the at least one coloring material to be consumed calculated by said calculation means, via a network; and
supply instruction means for instructing the supply of the at least one coloring material to the printing apparatus, based on the information received by said information receiving means.

21. A coloring material supply management system according to claim 20, further comprising color conversion means for carrying out color conversion of the digital image to a subtractive color mixture digital image which is expressed by a subtractive color process, when the digital image is an image expressed by an additive color process, and
wherein said digital image input means includes means for inputting the subtractive color mixture digital image obtained by the color conversion by said color conversion means.

22. A coloring material supply management system according to claim 20, further comprising pseudo gradation means for carrying out pseudo-gradation processing on the digital image by a dither method, and
wherein said calculation means includes gradation-specific amount calculation means for calculating gradation-specific amounts of the at least one coloring material to be consumed.

23. A coloring material supply management system according to claim 20, wherein the printing apparatus is capable of carrying out printing in dots having a plurality of dot sizes, and
wherein said calculation means includes means for calculating amounts of the at least one coloring material to be consumed, on a dot size-by-dot size basis.

24. A coloring material supply management system according to claim 20, further comprising copy number-designating means for designating a number of copies of the printed matter, and
wherein said calculation means calculates the amount of the at least one coloring material to be consumed according to the number of copies designated by said copy number-designating means.

25. A coloring material supply management system according to claim 20, wherein the printing apparatus includes a printing apparatus using coloring materials of a plurality of colors,
wherein said calculation means includes means for calculating amounts of the coloring materials to be consumed, on a color-by-color basis, and
wherein said supply instruction means includes means for issuing instructions for supply of the coloring materials on a color-by-color basis.

26. A coloring material supply management system according to claim 20, wherein said information receiving means is capable of receiving the information at a desired time or at all times.

27. A coloring material supply management system according to claim 20, further comprising maintenance service instruction means for issuing an instruction for execution of maintenance service for the printing apparatus when said maintenance service instruction means has detected, based on the information received by said information receiving means, that a cumulative amount of the at least one coloring material to be consumed has reached a predetermined amount.

28. A coloring material supply management system according to claim 27, further comprising maintenance consumption amount-calculating means for calculating an amount of the at least one coloring material to be consumed for operation of the maintenance service, and
wherein said supply instruction means includes means for issuing an instruction for supply of the at least one coloring material in an amount incorporating the amount of the at least one coloring material calculated by said maintenance consumption amount-calculating means when said maintenance service instruction means has issued the instruction for execution of maintenance service.

29. A coloring material supply management according to claim 20, wherein the network is constructed by an internet or a LAN.

30. A coloring material supply management according to claim 20, wherein the at least one coloring material includes ink or toner.

31. A coloring material supply management according to claim 20, wherein the printing apparatus includes an electrophotographic printer.

32. A p coloring material supply management according to claim 20, wherein the printing apparatus includes an ink jet printer including an ink jet head having nozzles for ejecting ink therefrom.

33. A coloring material supply management according to claim 32, further comprising automatic cleaning consumption amount-calculating means for calculating an amount of the at least one coloring material to be consumed for automatic cleaning executed by sucking the ink from the nozzles of the ink jet head, and
wherein said supply instruction means includes means for issuing an instructing for supply of the at least one coloring material in an amount incorporating the amount of the at least one coloring material calculated by said automatic cleaning consumption amount-calculating means.

34. A coloring material supply management system according to claim 33, further comprising maintenance service instruction means for issuing an instruction for execution of maintenance service for the printing apparatus when said maintenance service instruction means has detected that a cumulative amount of the amount of the at least one coloring material calculated by said automatic cleaning consumption amount-calculating means has reached a predetermined amount.

35. A coloring material supply management system according to claim 33, further comprising periodical flushing consumption amount-calculating means for calculating an amount of the at least one coloring material to be consumed for periodical flushing executed by ejecting the ink periodically from the nozzles of the ink jet head, and
wherein said supply instruction means includes means for issuing an instructing for supply of the at least one coloring material in an amount incorporating the amount of the at least one coloring material calculated by said periodical flushing consumption amount-calculating means.

36. A coloring material supply management system according to claim 35, further comprising maintenance service instruction means for issuing an instruction for execution of maintenance service for the printing apparatus when said maintenance service instruction means has detected that a cumulative amount of the amount of the at least one coloring material calculated by said periodical flushing consumption amount-calculating means has reached a predetermined amount.

37. A coloring material supply management system comprising:
a user terminal capable of calculating an amount of at least one coloring material to be consumed by a printing apparatus for producing printed matter based on a digital image represented by discrete numerical data, and transmitting information of the amount of the at least one coloring material to be consumed; and
a host terminal capable of receiving the information of the amount of the at least one coloring material to be consumed, via a network, and issuing an instructing for supply of the at least one coloring material to the printing apparatus,
said host terminal executing an order process for placing an order for the supply of the at least one coloring material to the printing apparatus, based on the information of the amount of the at least one coloring material to be consumed, and transmitting information of a schedule for the supply of the at least one coloring material, to said user terminal.

38. A coloring material supply management system comprising:
a user terminal capable of calculating an amount of at least one coloring material to be consumed by a printing apparatus for producing printed matter, based on a digital image represented by discrete numerical data, and transmitting information of the amount of the at least one coloring material to be consumed; and
a host terminal capable of receiving the information of the amount of the at least one coloring material to be consumed, via a network, and issuing an instruction for supply of the at least one coloring material to the printing apparatus,
said host terminal transmitting information of a schedule for the supply of the at least one coloring material to said user terminal, based on the information of the amount of the at least one coloring material to be consumed, received from said user terminal,
said user terminal transmitting information of a request of the supply of the at least one coloring material to said host terminal, based on the information of the schedule for the supply of the at least one coloring material, received from said host terminal.
said host terminal executing an order process for placing an order for the supply of the at least one coloring material to the printing apparatus, based on the information of the request of the supply of the at least one coloring material, received from said user terminal.

39. A coloring material supply management system according to claim 37 or 38, wherein when said host terminal has detected, based on the information of the at least one coloring material to be consumed, that a cumulative amount of the amount of the at least one coloring material to be consumed has reached a predetermined amount, said host terminal carries out an order process for placing an order for maintenance service for the printing apparatus, and transmits information of a schedule of execution of the maintenance service to said user terminal.
